# EUROPEAN PATENT SPECIFICATION

(11) **EP 4 096 053 B1**
(45) Date of publication and mention of the grant of the patent: **22.11.2023**
(21) Application number: 22175775.0
(22) Date of filing: 27.05.2022
(51) Int. Cl.: H02J 7/02, H02M 3/158, H02M 3/335

(54) **BATTERY CONTROL CIRCUIT, BATTERY AND ELECTRONIC DEVICE**
BATTERIESTEUERSCHALTUNG, BATTERIE UND ELEKTRONISCHES GERÄT
CIRCUIT DE COMMANDE DE BATTERIE, BATTERIE ET DISPOSITIF ÉLECTRONIQUE

(30) Priority: 27.05.2021 CN 202110587576
(43) Date of publication of application: 30.11.2022
(73) Proprietor: Huawei Digital Power Technologies Co., Ltd., Shenzhen, 518043 (CN)
(72) Inventor: CHEN, Baoguo, Shenzhen, 518129 (CN); ZHU, Jianhua, Shenzhen, 518129 (CN)
(74) Representative: Gill Jennings & Every LLP

(56) References cited:
- EP-A1- 3 046 235
- GB-A- 2 137 030
- HOQUE M M ET AL: "Battery charge equalization controller in electric vehicle applications: A review", RENEWABLE AND SUSTAINABLE ENERGY REVIEWS, vol. 75, 9 December 2016 (2016-12-09), pages 1363-1385, XP029978443, ISSN: 1364-0321, DOI: 10.1016/J.RSER.2016.11.126

## Description

### TECHNICAL FIELD

This application relates to a battery control circuit, a battery, and a related electronic device.

### BACKGROUND

Lithium-ion batteries (batteries for short) have advantages of high cycle life, high energy density, and high charging/discharging rates. However, in a low-temperature environment, an internal resistance of a battery increases, a capacity rapidly decays, and there is a risk of lithium dissipation at a negative electrode of the battery when the battery is charged at a low temperature. In other words, the battery cannot work normally in the low-temperature environment. To enable the battery to work normally at a low temperature, the battery may be heated first, and the battery may be charged or discharged only after a temperature of the battery reaches a temperature required for a normal operation.

In a conventional technology, an external heater or heating box is disposed around the battery to raise an ambient temperature around the battery to heat the battery. The inventor of this application finds that heating efficiency of the battery in the conventional technology is too low.

GB2137030A relates to regulated DC to DC converter. EP3046235A1 relates to synchronous machine with rechargeable power storage devices.

HOQUE M M ET AL, "Battery charge equalization controller in electric vehicle applications: A review", RENEWABLE AND SUSTAINABLE ENERGYREVIEWS, (20161209), vol. 75, doi:10.1016/J.RSER.2016.11.126, ISSN 1364-0321, pages 1363 - 1385 provides a review of battery charge equalization controller in electric vehicle applications.

### SUMMARY

This application provides a battery control circuit, a battery, and a related electronic device to implement charging and discharging by using energy of a battery pack. Currents of charging and discharging both generate Joule heat on an internal resistance of the battery pack to heat the battery. Therefore, heating efficiency is high.

The invention has been defined in the independent claims. Further specific technical features have been defined in the dependent claims.

According to a first aspect, an implementation of this application provides a battery control circuit. The battery control circuit is connected in parallel between a positive electrode and a negative electrode of a battery pack, and the battery control circuit includes a first inductor, a first semiconductor switching device, a second semiconductor switching device, a first diode, and a second diode. A first terminal of the first semiconductor switching device and a cathode of the first diode are both coupled to the positive electrode of the battery pack, and a second terminal of the first semiconductor switching device is coupled to a terminal of the first inductor and a cathode of the second diode. An anode of the first diode is coupled to another terminal of the first inductor and a first terminal of the second semiconductor switching device, and a second terminal of the second semiconductor switching device and an anode of the second diode are both coupled to the negative electrode of the battery pack. During specific implementation, the first semiconductor switching device and the second semiconductor switching device are simultaneously turned on and the battery pack is in a discharging state, or the first semiconductor switching device and the second semiconductor switching device are simultaneously turned off and the battery pack is in a charging state. Because the battery pack has an internal resistance, a current flows through the internal resistance of the battery pack regardless of whether the battery pack is in the discharging state or the charging state. The internal resistance generates Joule heat to heat the battery. In other words, in this implementation of this application, the battery control circuit only needs to control the two semiconductor switching devices to be simultaneously turned on or turned off to implement charging and discharging by using energy of the battery pack. Currents of charging and discharging both generate heat on the internal resistance of the battery pack to heat the battery. Therefore, heating efficiency is high, a small quantity of semiconductor switching devices are used, driving control is simple, and costs are low. Furthermore, the first semiconductor switching device and the second semiconductor switching device are not on a same bridge arm. Therefore, there is no risk of a short circuit caused by a direct connection between an upper tube and a lower tube of one bridge arm, and safety is high.

It may be understood that when an ambient temperature of the battery is lower than a temperature required for a normal operation of the battery, the battery control circuit provided in this implementation of this application may first be used to heat the battery, and then the battery interacts with the outside (for example, with at least one of a load and a charger). Further, when the battery interacts with the outside, for example, is discharged to the load or is charged by the charger, because the battery control circuit provided in this implementation of this application is connected in parallel between the positive electrode and the negative electrode of the battery, an interaction between the battery control circuit and the battery does not conflict with the interaction between the battery and the outside. In other words, when the battery interacts with the outside, the battery pack may still be charged and discharged by using the battery control circuit provided in this implementation of this application, to heat the battery. However, it should be noted that even if the battery is connected to a load and is discharged to the load, a current flows through the internal resistance of the battery pack, but a magnitude of the current is affected by the load. If a resistance value of the load is large and the current flowing through the internal resistance of the battery pack is small, energy for beating the battery is insufficient and reliability is poor. For another example, even if the battery is connected to a charger, if a charging current of the charger is small, the current flowing through the internal resistance of the battery pack is also small and energy for heating the battery is still insufficient. Therefore, in this implementation of this application, the battery may be heated without relying on the outside. Instead, charging and discharging of the battery pack are implemented by using energy of the battery pack and the battery control circuit that is provided in this implementation of this application. The currents of charging and discharging both generate heat on the internal resistance of the battery pack to heat the battery. This is easy and reliable.

The battery control circuit further includes a control module, and the control module is coupled to a third terminal of the first semiconductor switching device and a third terminal of the second semiconductor switching device.

The battery control circuit further includes a temperature detection module. The temperature detection module is configured to detect a temperature of the battery pack, and send the temperature of the battery pack to the control module. When the temperature of the battery pack is lower than a preset temperature, the control module is configured to control the first semiconductor switching device and the second semiconductor switching device to simultaneously switch between an on state and off state at a preset frequency. During specific implementation, the control module controls the first semiconductor switching device and the second semiconductor switching device to be simultaneously turned on, the battery pack is in a discharging state, and some energy of the battery pack is transferred to the first inductor (that is, the battery pack excites the first inductor). However, after the first inductor saturated, even if the first semiconductor switching device and the second semiconductor switching device are still in an on state, a discharging current of the battery pack cannot pass through the first inductor, in other words, the first inductor terminates discharging of the battery pack after becoming saturated. However, the control module may control the first semiconductor switching device and the second semiconductor switching device to be simultaneously turned off, so that some energy on the first inductor is transferred to the battery pack (that is, the first inductor is demagnetized). In other words, the first inductor charges the battery pack. In this case, the battery pack not only recycles the energy of the battery pack but also releases the energy on the first inductor, so that the first inductor can accept energy transferred by the battery pack when the battery pack is discharged again. In this way, the battery pack is discharged and charged repeatedly, and the battery is continuously heated. In other words, the control module switches the states of the first semiconductor switching device and the second semiconductor switching device to ensure continuity of discharging and charging of the battery pack and recycle the energy of the battery pack, thereby improving energy utilization in this implementation of this application and ensuring good applicability.

In a possible implementation, the battery control circuit further includes a current detection module. The current detection module may detect a current of the first inductor. The control module may obtain the current of the first inductor detected by the current detection module, and determine the preset frequency. In this implementation of this application, in the battery control circuit, the preset frequency may be determined based on the current of the first inductor. Therefore, charging and discharging of the battery pack can be better controlled, and the energy utilization of the battery pack can be improved.

In a possible implementation, during specific implementation, the preset frequency may be determined by the control module based on a time interval between a first moment and a second moment, the first moment is a moment at which the control module detects that the current of the first inductor increases to a first preset current, and the second moment is a moment at which the control module detects that the current of the first inductor decreases to a second preset current.

According to a second aspect, an implementation of this application provides a battery control circuit. The battery control circuit is connected in parallel between a positive electrode and a negative electrode of a battery pack, the battery control circuit includes a first inductor, a first semiconductor switching device, and a second semiconductor switching device, the first inductor includes a first winding and a second winding, and a first terminal of the first winding and a first terminal of the second winding are dotted terminals. It may be understood that the dotted terminals mean that alternating currents are supplied to the first winding and the second winding separately to generate magnetic fields. When flux directions of magnetic fields generated by two windings are the same, terminals into which currents of the two windings flow are dotted terminals of the two windings. The first terminal of the first winding is coupled to the positive electrode of the battery pack, a second terminal of the first winding is coupled to a first terminal of the first semiconductor switching device, and a second terminal of the first semiconductor switching device is coupled to the negative electrode of the battery pack. A second terminal of the second winding is coupled to the positive electrode of the battery pack, the first terminal of the second winding is coupled to a first terminal of the second semiconductor switching device, and a second terminal of the second semiconductor switching device is coupled to the negative electrode of the battery pack. During specific implementation, the first semiconductor switching device and the second semiconductor switching device are alternately turned on. This implementation of this application is another possible implementation of the battery control circuit. Because the first semiconductor switching device and the second semiconductor switching device are alternately turned on, heating of the semiconductor switching devices is even, safety of the battery control circuit is good, and reliability is high.

The battery control circuit further includes a control module, and the control module is coupled to a third terminal of the first semiconductor switching device and a third terminal of the second semiconductor switching device.

The battery control circuit further includes a temperature detection module. The temperature detection module is configured to detect a temperature of the battery pack, and send the temperature of the battery pack to the control module. When the temperature of the battery pack is lower than a preset temperature, the control module is configured to control, at a preset frequency, the first semiconductor switching device and the second semiconductor switching device to be alternately turned on.

In a possible implementation, when the first semiconductor switching device is turned on and the second semiconductor switching device is turned off, the battery pack is in a discharging state; or when the second semiconductor switching device is turned on and the first semiconductor switching device is turned off, the battery pack is in a charging state.

In a possible implementation, when the first semiconductor switching device is turned on and the second semiconductor switching device is turned off, if a current direction of the first winding is a first direction, the battery pack is in a discharging state; when the second semiconductor switching device is turned on and the first semiconductor switching device is turned off, if a current direction of the second winding is a second direction, the battery pack is in a charging state; when the second semiconductor switching device is turned on and the first semiconductor switching device is turned off, if a current direction of the second winding is a first direction, the battery pack is in a discharging state; or when the first semiconductor switching device is turned on and the second semiconductor switching device is turned off, if a current direction of the first winding is a second direction, the battery pack is in a charging state, where the first direction is opposite to the second direction. A difference between this implementation of this application and the first possible implementation of the second aspect is that when the first semiconductor switching device is turned on and the second semiconductor switching device is turned off, the battery pack may be in the discharging state or the charging state; and when the second semiconductor switching device is turned on and the first semiconductor switching device is turned off, the battery pack may be in the charging state or the discharging state. As can be learned, because on/off states of the semiconductor switching devices are the same (to be specific, the second semiconductor switching device is turned on and the first semiconductor switching device is turned off or the first semiconductor switching device is turned on and the second semiconductor switching device is turned off) in the charging state and the discharging state, the on/off states of the semiconductor switching devices do not need to be frequently switched. Therefore, a switch loss is reduced, and heating efficiency of the battery control circuit is further improved.

In a possible implementation, the battery control circuit further includes a current detection module. The current detection module may detect a current of the first winding and a current of the second winding. The control module may obtain the current of the first winding and the current of the second winding that are detected by the current detection module, and determine the preset frequency.

In a possible implementation, during specific implementation, the preset frequency may be determined by the control module based on a time interval between a first moment and a second moment, the first moment is a moment at which the control module detects that the current of the first inductor increases to a first preset current, and the second moment is a moment at which the control module detects that the current of the first inductor decreases to a second preset current.

According to a third aspect, an implementation of this application provides a battery control circuit. The battery control circuit includes a first electrochemical cell and a second electrochemical cell. A positive electrode of the first electrochemical cell is coupled to a negative electrode of the second electrochemical cell, the battery control circuit includes a first inductor, a first semiconductor switching device, and a second semiconductor switching device, the first inductor includes a first winding and a second winding, and a first terminal of the first winding and a first terminal of the second winding are dotted terminals. It may be understood that the dotted terminals mean that alternating currents are supplied to the first winding and the second winding separately to generate magnetic fields. When flux directions of magnetic fields generated by two windings are the same, terminals into which currents of the two windings flow are dotted terminals of the two windings. The first terminal of the first winding is coupled to a positive electrode of the second electrochemical cell, a second terminal of the first winding is coupled to a first terminal of the first semiconductor switching device, and a second terminal of the first semiconductor switching device is coupled to a negative electrode of the first electrochemical cell. A second terminal of the second winding is coupled to the positive electrode of the first electrochemical cell, a first terminal of the second winding is coupled to a first terminal of the second semiconductor switching device, and a second terminal of the second semiconductor switching device is coupled to the negative electrode of the first electrochemical cell. During specific implementation, the first semiconductor switching device and the second semiconductor switching device are alternately turned on. In this implementation of this application, the first electrochemical cell and the second electrochemical cell are simultaneously discharged, and only the first electrochemical cell is charged; or only the first electrochemical cell is discharged, and the first electrochemical cell and the second electrochemical cell are simultaneously charged. In this case, an amount of heat generated by the first electrochemical cell is greater than an amount of heat generated by the second electrochemical cell. This implementation of this application may be applicable to different electrochemical cells. For example, a temperature withstand of the first electrochemical cell is less than that of the second electrochemical cell, and an internal resistance of the first electrochemical cell is greater than that of the second electrochemical cell. In other words, this implementation of this application can better adapt to differences between electrochemical cells and has good applicability.

The battery control circuit includes a control module, and the control module is coupled to a third terminal of the first semiconductor switching device and a third terminal of the second semiconductor switching device.

The battery control circuit further includes a temperature detection module. The temperature detection module is configured to detect temperatures of the first electrochemical cell and the second electrochemical cell, and send the temperatures of the first electrochemical cell and the second electrochemical cell to the control module. When a temperature of at least one of the first electrochemical cell and the second electrochemical cell is lower than a preset temperature, the control module is configured to control, at a preset frequency, the first semiconductor switching device and the second semiconductor switching device to be alternately turned on.

In a possible implementation, when the first semiconductor switching device is turned on and the second semiconductor switching device is turned off, the first electrochemical cell and the second electrochemical cell are in a discharging state; or when the second semiconductor switching device is turned on and the first semiconductor switching device is turned off, the first electrochemical cell is in a charging state.

In a possible implementation, when the first semiconductor switching device is turned on and the second semiconductor switching device is turned off, if a current direction of the first winding is a first direction, the first electrochemical cell and the second electrochemical cell are both in a discharging state; when the second semiconductor switching device is turned on and the first semiconductor switching device is turned off, if a current direction of the second winding is a second direction, the first electrochemical cell is in a charging state; when the second semiconductor switching device is turned on and the first semiconductor switching device is turned off, if a current direction of the second winding is a first direction, the first electrochemical cell is in a discharging state; or when the first semiconductor switching device is turned on and the second semiconductor switching device is turned off, if a current direction of the first winding is a second direction, the first electrochemical cell and the second electrochemical cell are in a charging state.

In a possible implementation, the battery control circuit further includes a current detection module. The current detection module may detect a current of the first winding and a current of the second winding. The control module may obtain the current of the first winding and the current of the second winding that are detected by the current detection module, and determine the preset frequency.

In a possible implementation, the preset frequency may be determined by the control module based on a time interval between a first moment and a second moment, the first moment is a moment at which the control module detects that the current of the first inductor increases to a first preset current, and the second moment is a moment at which the control module detects that the current of the first inductor decreases to a second preset current.

According to a fourth aspect, an implementation of this application provides a battery. The battery includes a battery pack and the battery control circuit according to any one of the first aspect or the possible implementations with reference to the first aspect, the battery control circuit according to any one of the second aspect or the possible implementations with reference to the second aspect, or the battery control circuit according to any one of the third aspect or the possible implementations with reference to the third aspect.

According to a fifth aspect, an implementation of this application provides an electronic device. The electronic device includes a load and the battery according to the fourth aspect. The battery may supply power to the load.

It should be understood that, for implementations and beneficial effects of the plurality of foregoing aspects of this application, reference may be made to each other.

### BRIEF DESCRIPTION OF DRAWINGS

FIG. 1 shows a battery according to an implementation of this application;
FIG. 2 is a circuit principle diagram of a battery control circuit according to an implementation of this application;
FIG. 3 is a schematic diagram of a waveform of a battery control circuit according to an implementation of this application;
FIG. 4A and FIG. 4B are partial equivalent circuit diagrams of a battery control circuit according to an implementation of this application;
FIG. 5 is another circuit principle diagram of a battery control circuit according to an implementation of this application;
FIG. 6A and FIG. 6B are other schematic diagrams of waveforms of a battery control circuit according to an implementation of this application;
FIG. 7A and FIG. 7B are other partial equivalent circuit diagrams of a battery control circuit according to an implementation of this application;
FIG. 8 is another schematic diagram of a waveform of a battery control circuit according to an implementation of this application;
FIG. 9A and FIG. 9B are other partial equivalent circuit diagrams of a battery control circuit according to an implementation of this application;
FIG. 10 is another circuit principle diagram of a battery control circuit according to an implementation of this application;
FIG. 11A and FIG. 11D are other partial equivalent circuit diagrams of a battery control circuit according to an implementation of this application; and
FIG. 12 shows another battery according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

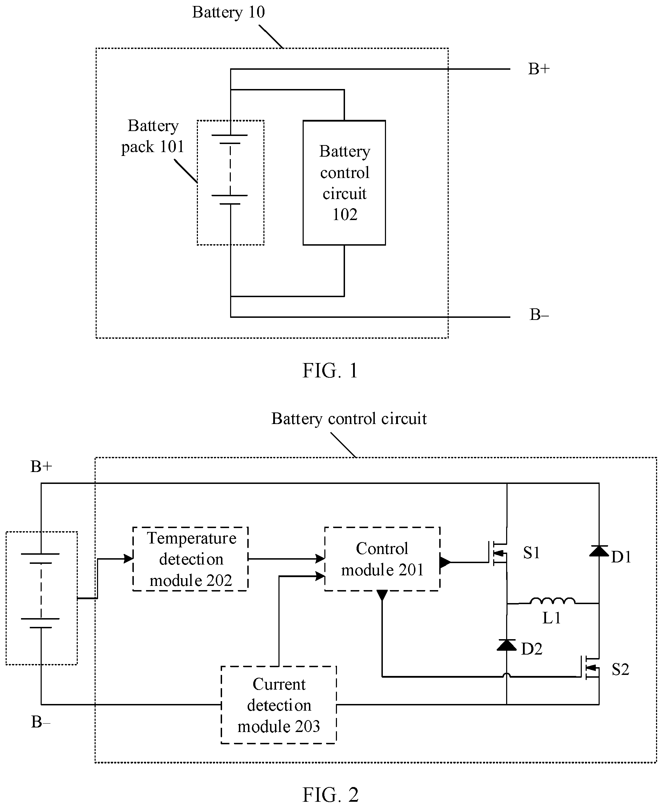

FIG. 1 shows a battery according to an implementation of this application. As shown in FIG. 1, the battery 10 includes a battery pack 101 and a battery control circuit 102.

The battery pack 101 may include at least one electrochemical cell (which may also be referred to as a single battery). For example, during specific implementation, M electrochemical cells are connected in series or in parallel to form a module, and N modules are connected in series or in parallel to form a battery pack, where M and N are positive integers. Therefore, the battery pack in this implementation of this application may also be referred to as batteries.

A battery control circuit 102 are connected in parallel between a positive electrode and a negative electrode of the battery pack 101. It may be understood that the positive electrode and the negative electrode of the battery pack 101 are a positive electrode B+ and a negative electrode B- of the battery 10. In this implementation of this application, the battery control circuit 102 may be directly connected in parallel between the positive electrode and the negative electrode of the battery pack 101 without drawing an intermediate tap from the battery pack 101, thereby reducing complexity of battery pack assembly.

In some feasible implementations, the battery control circuit 102 may be provided by a manufacturer that manufactures the battery. That is, as shown in FIG. 1, the battery control circuit 102 and the battery pack 101 are connected to each other by using a soldering tape and are encapsulated together as a part of the battery 10. In other words, the battery 10 has a self-heating function.

Optionally, in some feasible implementations, the battery control circuit may be disposed independently of the battery pack (not shown in the figure), and the battery control circuit is connected to the battery pack by using an electric wire. In other words, when the battery does not have a self-heating function, the battery control circuit provided in this implementation of this application may be connected in parallel between the positive electrode and the negative electrode of the battery.

In some feasible implementations, the battery 10 may further include a battery management system BMS. The BMS may detect a temperature of the battery pack 101, obtain a residual electricity amount of the battery pack 101, obtain information such as a terminal voltage of the battery pack 101, and correspondingly control charging and discharging of the battery 10 based on the obtained information. For specific implementation, refer to a BMS control mechanism in a conventional technology. Details are not described herein.

In this implementation of this application, charging and discharging may be implemented by using energy of the battery pack. Currents of charging and discharging both generate heat on an internal resistance of the battery pack to heat the battery.

The battery control circuit provided in implementations of this application is described in detail below with reference to FIG. 2 to FIG. 12.

In some feasible implementations, FIG. 2 is a circuit principle diagram of a battery control circuit according to an implementation of this application. As shown in FIG. 2, the battery control circuit provided in this implementation of this application includes a first inductor L1, a first semiconductor switching device S 1, a second semiconductor switching device S2, a first diode D1, and a second diode D2.

In this application, an example in which each semiconductor switching device is a metal-oxide-semiconductor field-effect transistor (Metal-Oxide-Semiconductor Field-Effect Transistor, MOSFET) is used for description. It should be understood that each semiconductor switching device may alternatively be a relay, a contactor, an insulated gate bipolar transistor (Insulated Gate Bipolar Transistor, IGBT), a triode, or the like.

During specific implementation, a first terminal (that is, a drain) of the first semiconductor switching device S1 and a cathode of the first diode D1 are both coupled to a positive electrode B+ of a battery pack, and a second terminal (that is, a source) of the first semiconductor switching device S1 is coupled to a terminal of the first inductor L1 and a cathode of the second diode D2. An anode of the first diode D1 is coupled to another terminal of the first inductor L1 and a first terminal (that is, a drain) of the second semiconductor switching device S2, and a second terminal (that is, a source) of the second semiconductor switching device S2 and an anode of the second diode D2 are both coupled to a negative electrode B- of the battery pack.

It should be noted that the "coupling" described in this application refers to a direct connection or an indirect connection. For example, a connection between A and B may be a direct connection between A and B or an indirect connection between A and B through one or more other electrical components. For example, A may be directly connected to C and C may be directly connected to B, so that A is connected to B through C.

The battery control circuit in this implementation of this application further includes a control module 201, and the control module 201 is coupled to a third terminal (that is, a gate) of the first semiconductor switching device S1 and a third terminal (that is, a gate) of the second semiconductor switching device S2. For example, the control module 201 may be a central processing unit (central processing unit, CPU), another general-purpose processor, a digital signal processor (digital signal processor, DSP), an application-specific integrated circuit (application specific integrated circuit, ASIC), a field-programmable gate array (field-programmable gate array, FPGA) or another programmable logic device, a discrete gate or transistor logic device, a discrete hardware component, or the like.

Optionally, the control module 201 may further be specifically implemented as a BMS in the battery. For specific implementation, refer to the BMS in a conventional technology. Details are not described herein.

Further, the battery control circuit further includes a temperature detection module 202. The temperature detection module 202 detects a temperature of the battery pack. For example, the temperature detection module 202 may be specifically a temperature sensor, and the temperature sensor may be located on a surface of the battery pack. If the battery pack includes a plurality of electrochemical cells, the temperature detection module 202 is accordingly provided with a plurality of temperature sensors. A surface of each electrochemical cell is correspondingly provided with a temperature sensor, configured to detect a temperature of each electrochemical cell.

The temperature detection module 202 is coupled to the control module 201. The temperature detection module 202 sends the detected temperature of the battery pack to the control module 201. When the temperature of the battery pack is lower than a first preset temperature, the control module 201 controls the first semiconductor switching device S1 and the second semiconductor switching device S2 to simultaneously switch between an on state and an off state at a first preset frequency. It may be understood that the first preset temperature is a critical temperature at which the battery pack can work normally, is an inherent attribute of the battery pack, and is related to at least one factor in a manufacturer, a manufacturing process, and a battery model of the battery pack.

During specific implementation, when the first semiconductor switching device S1 and the second semiconductor switching device S2 are simultaneously turned on, the positive electrode B+ of the battery pack, the first semiconductor switching device S1, the first inductor L1, the second semiconductor switching device S2, and the negative electrode B- of the battery pack form a closed loop. In this case, the battery pack is in a discharging state. When the first semiconductor switching device S1 and the second semiconductor switching device S2 are simultaneously turned off, because currents at two terminals of an inductor cannot be changed suddenly, a current of the first inductor L1 passes through the first diode D1, the positive electrode B+ of the battery pack, the negative electrode B- of the battery pack, and the second diode D2 to form a closed loop. In this case, the first inductor L1 charges the battery pack, and the battery pack is in a charging state. It should be understood that a current direction of the battery pack in the discharging state is opposite to a current direction of the battery pack in the charging state.

In some feasible implementations, the first preset frequency is a constant value pre-configured by the control module 201. For example, the control module 201 controls, within a time period of 0 ms to 0.5 ms, the first semiconductor switching device S1 and the second semiconductor switching device S2 to be simultaneously turned on. In this case, the battery pack is in the discharging state. The control module 201 controls, within a time period of 0.5 ms to 1 ms, the first semiconductor switching device S1 and the second semiconductor switching device S2 to be simultaneously turned off. In this case, the battery pack is in the charging state. In other words, the control module 201 simultaneously switches the on/off state of the first semiconductor switching device S1 and the second semiconductor switching device S2 at a time periodicity of 1 ms, that is, the first preset frequency is 1 kHz. In this implementation of this application, a time of switching from the on state to the off state of the first semiconductor switching device S1 and the second semiconductor switching device S2 is short. For example, the first preset frequency is at a level of kHz, and a switching periodicity is at a level of ms. In this way, accumulation of lithium ions in the battery pack at a negative electrode of an electrochemical cell can be reduced. In other words, this implementation of this application can reduce a possibility of negative electrode lithium dissect that occurs when the battery is charged in a low-temperature environment, and safety is high.

Optionally, in some feasible implementations, the battery control circuit further includes a current detection module 203. The current detection module 203 may detect the current of the first inductor L 1. The control module 201 may obtain the current of the first inductor L1 detected by the current detection module 203, and determine the first preset frequency based on the current of the first inductor L 1. For example, the current detection module 203 may be specifically a resistance, a current sensor, or the like. After controlling the first semiconductor switching device S1 and the second semiconductor switching device S2 to be simultaneously turned on, the control module 201 may obtain the current of the first inductor L 1, and denote a moment at which the current of the first inductor L1 increases to a first preset current as a first moment T1; control, at the first moment T1, the first semiconductor switching device S1 and the second semiconductor switching device S2 to be simultaneously turned off, obtain the current of the first inductor L1, denote a moment at which the current of the first inductor L1 decreases to a second preset current as a second moment T2, and control, at the second moment T2, the first semiconductor switching device S1 and the second semiconductor switching device S2 to be simultaneously turned on. The control module 201 may determine the first preset frequency f1 based on a time interval between the first moment T1 and the second moment T2, that is, f1=1/(2^{∗}|T1-T2|). In this implementation of this application, the first preset frequency may be determined in the battery control circuit. Therefore, charging and discharging of the battery pack can be better controlled, energy of the battery pack is efficiently used, and energy utilization of the battery pack is improved.

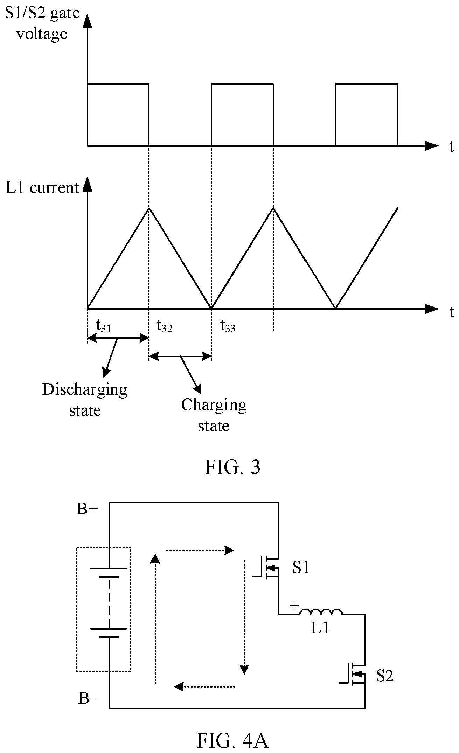

How the battery control circuit shown in FIG. 2 implements charging and discharging of the battery pack is described below by using examples with reference to FIG. 3 to FIG. 4B.

FIG. 3 is a schematic diagram of a waveform of a battery control circuit according to an implementation of this application. As shown in FIG. 3, in a time period from *t*₃₁ to *t*₃₂, the control module 201 simultaneously sends a high electrical level to a third terminal (that is, a gate) of the first semiconductor switching device S1 and a third terminal (that is, a gate) of the second semiconductor switching device S2, and the first semiconductor switching device S1 and the second semiconductor switching device S2 are simultaneously turned on. In this case, for a partial equivalent circuit diagram of the battery control circuit shown in FIG. 2, refer to FIG. 4A. As shown in FIG. 4A, the battery pack is discharged, and the positive electrode B+ of the battery pack, the first semiconductor switching device S1, the first inductor L1, the second semiconductor switching device S2, and the negative electrode B- of the battery pack form a closed loop. In this case, a current of the closed loop excites the first inductor L1, and the current of the first inductor L1 increases. Moreover, the current of the closed loop flows through an internal resistance of the battery pack, and generates Joule heat on the internal resistance of the battery pack. In other words, the battery pack may be discharged through the battery control circuit to heat the battery.

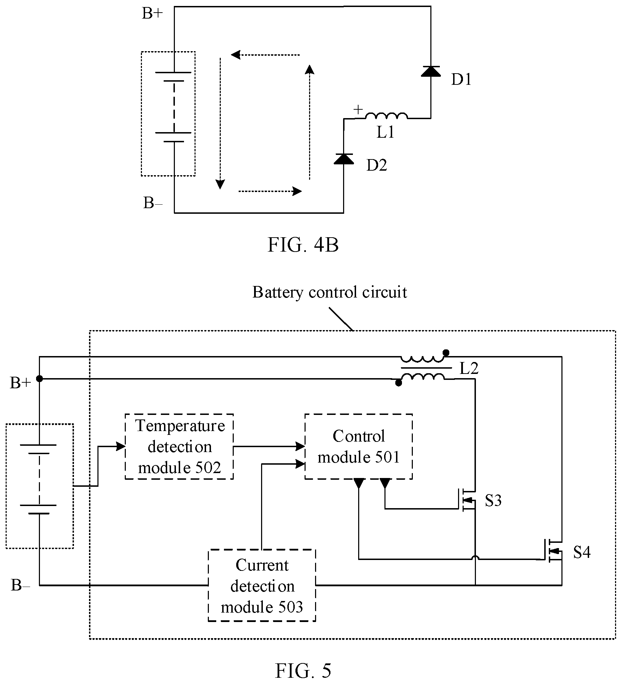

In a time period from *t*₃₂ to *t*₃₃, the control module 201 simultaneously sends a low electrical level to the gate of the first semiconductor switching device S1 and the gate of the second semiconductor switching device S2, and the first semiconductor switching device S1 and the second semiconductor switching device S2 are simultaneously turned off. In this case, for a partial equivalent circuit diagram of the battery control circuit shown in FIG. 2, refer to FIG. 4B. As shown in FIG. 4B, the current of the first inductor L1 continues to flow, and the current of the first inductor L1 flows through the first diode D1, the positive electrode B+ of the battery pack, the negative electrode B-of the battery pack, and the second diode D2 to form a closed loop to charge the battery pack. In this case, the first inductor L1 is demagnetized, and the current of the first inductor L1 decreases. Moreover, the current of the closed loop also flows through the internal resistance of the battery pack, and generates Joule heat on the internal resistance of the battery. In other words, the battery pack may be charged through the battery control circuit to heat the battery.

In other words, in this implementation of this application, the battery control circuit only needs to control the two semiconductor switching devices to be simultaneously turned on or turned off, that is, the first semiconductor switching device and the second semiconductor switching device are both at a high electrical level (that is, are simultaneously turned on) or are both at a low electrical level (that is, are simultaneously turned off), to implement charging and discharging by using energy of the battery pack. Currents of charging and discharging both generate heat on the internal resistance of the battery pack to heat the battery. Therefore, heating efficiency is high. In addition, a small quantity of semiconductor switching devices are used, driving control is simple, and costs are low. Furthermore, the first semiconductor switching device and the second semiconductor switching device are not on a same bridge arm. Therefore, there is no risk of a short circuit caused by a direct connection between an upper tube and a lower tube, the circuit is simple and reliable, and safety is high.

Optionally, in some feasible implementations, FIG. 5 is another circuit principle diagram of a battery control circuit according to an implementation of this application. As shown in FIG. 5, the battery control circuit is connected in parallel between a positive electrode B+ of a battery pack and a negative electrode B- of the battery pack. The battery control circuit includes a first inductor L2, a first semiconductor switching device S3, and a second semiconductor switching device S4, the first inductor L2 includes a first winding and a second winding, and a first terminal of the first winding and a first terminal of the second winding are dotted terminals.

For example, the first semiconductor switching device S3 and the second semiconductor switching device S4 are MOSFETs. During specific implementation, the first terminal of the first winding is coupled to the positive electrode B+ of the battery pack, a second terminal of the first winding is coupled to a first terminal (that is, a drain) of the first semiconductor switching device S3, and a second terminal (that is, a source) of the first semiconductor switching device S3 is coupled to the negative electrode B- of the battery pack. A second terminal of the second winding is coupled to the positive electrode B+ of the battery pack, the first terminal of the second winding is coupled to a first terminal (that is, a drain) of the second semiconductor switching device S4, and a second terminal (that is, a source) of the second semiconductor switching device S4 is coupled to the negative electrode B- of the battery pack.

The battery control circuit in this implementation of this application further includes a control module 501, and the control module 501 is coupled to a third terminal (that is, a gate) of the first semiconductor switching device S3 and a third terminal (that is, a gate) of the second semiconductor switching device S4. For example, the control module 501 may be a central processing unit (central processing unit, CPU), another general-purpose processor, a digital signal processor (digital signal processor, DSP), an application-specific integrated circuit (application specific integrated circuit, ASIC), a field-programmable gate array (field-programmable gate array, FPGA) or another programmable logic device, a discrete gate or transistor logic device, a discrete hardware component, or the like.

Optionally, the control module 501 may further be specifically implemented as a BMS in the battery. For specific implementation, refer to the BMS in a conventional technology. Details are not described herein.

Further, the battery control circuit further includes a temperature detection module 502. The temperature detection module 502 detects a temperature of the battery pack. For example, the temperature detection module 502 may be specifically a temperature sensor, and the temperature sensor may be located on a surface of the battery pack. If the battery pack includes a plurality of electrochemical cells, the temperature detection module 502 is accordingly provided with a plurality of temperature sensors. A surface of each electrochemical cell is correspondingly provided with a temperature sensor, configured to detect a temperature of each electrochemical cell.

The temperature detection module 502 is coupled to the control module 501. The temperature detection module 502 sends the detected temperature of the battery pack to the control module 501. When the temperature of the battery pack is lower than a second preset temperature, the control module 501 controls, at a second preset frequency, the first semiconductor switching device S3 and the second semiconductor switching device S4 to be alternately turned on. It may be understood that the second preset temperature is a critical temperature at which the battery pack can work normally, is an inherent attribute of the battery pack, and is related to at least one factor in a manufacturer, a manufacturing process, and a battery model of the battery pack.

In some feasible implementations, when the first semiconductor switching device S3 is turned on and the second semiconductor switching device S4 is turned off, the positive electrode B+ of the battery pack, the first winding, the first semiconductor switching device S3, and the negative electrode B- of the battery pack may form a closed loop. In this case, the battery pack is in a discharging state, and a current of the first winding increases along a first direction. When the second semiconductor switching device S4 is turned on and the first semiconductor switching device S3 is turned off, energy obtained by the first winding in the first inductor L2 when the battery pack is in the discharging state is released through the second winding in the first inductor L2. That is, the second winding, the positive electrode B+ of the battery pack, the negative electrode B- of the battery pack, and the second semiconductor switching device S4 form a closed loop. The second winding charges the battery pack. In this case, the battery pack is in a charging state, and a current of the second winding decreases along a second direction. The first direction is opposite to the second direction. That is, a current direction of the battery pack in the discharging state is opposite to a current direction of the battery pack in the charging state.

For example, the second preset frequency is a constant value pre-configured by the control module 501. For example, the control module 501 controls, within a time period of 0 ms to 0.1 ms, the first semiconductor switching device S3 to be turned on and the second semiconductor switching device S4 to be turned off. In this case, the battery pack is in the discharging state. The control module 501 controls, within a time period of 0.1 ms to 0.2 ms, the first semiconductor switching device S3 to be turned off and the second semiconductor switching device S4 to be turned on. In this case, the battery pack is in the charging state. The battery pack completes a time of charging and discharging within a time period of 0 ms to 0.2 ms. Similarly, the control module 501 controls, within a time period of 0.2 ms to 0.3 ms, the first semiconductor switching device S3 to be turned on and the second semiconductor switching device S4 to be turned off. In this case, the battery pack is in the discharging state. The control module 501 controls, within a time period of 0.3 ms to 0.4 ms, the first semiconductor switching device S3 to be turned off and the second semiconductor switching device S4 to be turned on. In this case, the battery pack is in the charging state. Cyclic charging and discharging are performed by analogy. In other words, the control module 501 alternately turns on the first semiconductor switching device S3 and the second semiconductor switching device S4 at a time periodicity of 0.2 ms, that is, the second preset frequency is 5 kHz.

It should be noted that the battery pack may be in one of the foregoing states. For example, the control module 501 may control only the first semiconductor switching device S3 to be turned on, the second semiconductor switching device S4 to be turned off, and the battery pack to be in the discharging state; or the control module 501 may control only the first semiconductor switching device S3 to be turned off, the second semiconductor switching device S4 to be turned on, and the battery pack to be in the charging state. The foregoing example is merely a specific implementation, and should not be construed as a limitation on this application.

Further, in some feasible implementations, when the first semiconductor switching device S3 is turned on and the second semiconductor switching device S4 is turned off, the positive electrode B+ of the battery pack, the first winding, the first semiconductor switching device S3, and the negative electrode B- of the battery pack may form a closed loop. In this case, the battery pack is in a discharging state, and a current of the first winding increases along a first direction. When the second semiconductor switching device S4 is turned on and the first semiconductor switching device S3 is turned off, energy obtained by the first winding in the first inductor L2 when the battery pack is in the discharging state is released through the second winding in the first inductor L2. That is, the second winding, the positive electrode B+ of the battery pack, the negative electrode B- of the battery pack, and the second semiconductor switching device S4 form a closed loop. The second winding charges the battery pack. In this case, the battery pack is in a charging state, and a current of the second winding decreases along a second direction. In addition, after the current of the second winding decreases to a first preset threshold, for example, 0, the control module 501 does not change an on/off state of each semiconductor switching device, to be specific, the second semiconductor switching device S4 is turned on, the first semiconductor switching device S3 is turned off, and the battery pack is in the discharging state. In this case, the positive electrode B+ of the battery pack, the second winding, the second semiconductor switching device S4, and the negative electrode B- of the battery pack form a closed loop, and the current of the second winding increases along the first direction. In addition, after the current of the second winding increases to the second preset threshold, for example, 10 A, the first semiconductor switching device S3 is turned on, the second semiconductor switching device S4 is turned off, and energy obtained by the second winding of the first inductor L2 when the battery pack is in the discharging state is released through the first winding of the first inductor L2. That is, the first winding, the positive electrode B+ of the battery pack, the negative electrode B- of the battery pack, and the first semiconductor switching device S3 form a closed loop. The first winding charges the battery pack. In this case, the battery pack is in a charging state, and a current of the first winding decreases along a second direction. As can be learned, because on/off states of the semiconductor switching devices may be the same (to be specific, the second semiconductor switching device S4 is turned on and the first semiconductor switching device S3 is turned off or the first semiconductor switching device S3 is turned on and the second semiconductor switching device S4 is turned off) in the charging state and the discharging state, the on/off states of the semiconductor switching devices do not need to be frequently switched. Therefore, a switch loss is reduced, and heating efficiency of the battery control circuit is further improved.

For example, the control module 501 controls, within a time period of 0 ms to 0.1 ms, the first semiconductor switching device S3 to be turned on and the second semiconductor switching device S4 to be turned off, and the current of the first winding increases along the first direction. In this case, the battery pack is in the discharging state. The control module 501 controls, within a time period of 0.1 ms to 0.2 ms, the second semiconductor switching device S4 to be turned on and the first semiconductor switching device S3 to be turned off, and the current of the second winding decreases along the second direction. In this case, the battery pack is in the charging state. A difference is that the control module 501 keeps controlling, within a time period of 0.2 ms to 0.3 ms, the second semiconductor switching device S4 to be turned on and the first semiconductor switching device S3 to be turned off, and the current of the second winding increases along the first direction. In this case, the battery pack is in the discharging state. The control module 501 controls, within a time period of 0.3 ms to 0.4 ms, the first semiconductor switching device S3 to be turned on and the second semiconductor switching device S4 to be turned off, and the current of the first winding decreases along the second direction. In this case, the battery pack is in the charging state. In other words, the control module 501 alternately turns on the first semiconductor switching device S3 and the second semiconductor switching device S4 at a time periodicity of 0.4 ms. In this case, the second preset frequency is 2.5 kHz.

Optionally, in some feasible implementations, the battery control circuit further includes a current detection module 503. The current detection module 503 may detect the current of the first winding and the current of the second winding. For example, when the battery pack is in the discharging state, the current detection module 503 detects the current of the first winding; and when the battery pack is in the charging state, the current detection module 503 detects the current of the second winding. The control module 501 may obtain the current of the first winding and the current of the second winding that are detected by the current detection module 503, and determine the second preset frequency based on the current of the first winding and the current of the second winding. For example, the current detection module 503 may be specifically a resistance, a current sensor, or the like.

For example, after controlling the first semiconductor switching device S3 to be turned on and the second semiconductor switching device S4 to be turned off, the control module 501 may obtain the current of the first winding, and denote a moment at which the current of the first winding increases to a first preset current as a first moment T3; and control, at the first moment T3, the first semiconductor switching device S3 to be turned off and the second semiconductor switching device S4 to be turned on, obtain the current of the second winding, denote a moment at which the current of the second winding decreases to a second preset current as a second moment T4, and control, at the second moment T4, the first semiconductor switching device S3 to be turned on and the second semiconductor switching device S4 to be turned off. The control module 501 may determine the second preset frequency f2 based on a time interval between the first moment T3 and the second moment T4, that is, f2=1/(|T3-T4|).

For another example, after controlling the first semiconductor switching device S3 to be turned on and the second semiconductor switching device S4 to be turned off, the control module 501 may obtain the current of the first winding, and denote a moment at which the current of the first winding increases to the first preset current as a first moment T5; and control, at the first moment T5, the first semiconductor switching device S3 to be turned off and the second semiconductor switching device S4 to be turned on, obtain the current of the second winding, and denote a moment at which the current of the second winding decreases to the second preset current as a second moment T6. In this case, the control module 501 does not change on/off states of the first semiconductor switching device and the second semiconductor switching device; controls, when the current of the second winding increases to the first preset current, the first semiconductor switching device S3 to be turned on and the second semiconductor switching device S4 to be turned off; and when the current of the first winding decreases to the second preset current threshold, controls the first semiconductor switching device S3 to be turned off and the second semiconductor switching device S4 to be turned on. The control module 501 may determine the second preset frequency f2' based on a time interval between the first moment T5 and the second moment T6, that is, f2'=1/(2^{∗}|T5-T6|).

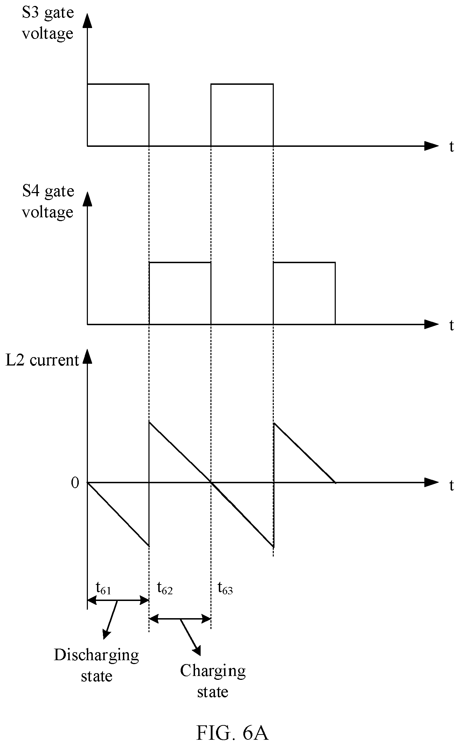

How the battery control circuit shown in FIG. 5 implements charging and discharging of the battery pack is described below by using examples with reference to FIG. 6A to FIG. 9B.

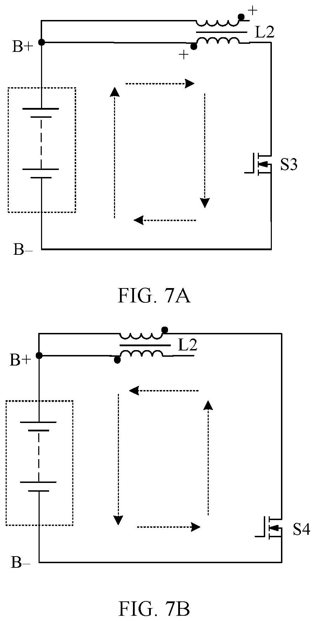

FIG. 6A is another schematic diagram of a waveform of a battery control circuit according to an implementation of this application. As shown in FIG. 6A, in a time period from *t*₆₁ to *t*₆₂, the control module 501 sends a high electrical level to a third terminal (that is, a gate) of the first semiconductor switching device S3, and sends a low electrical level to a third terminal (that is, a gate) of the second semiconductor switching device S4. In this case, for a partial equivalent circuit diagram of the battery control circuit shown in FIG. 5, refer to FIG. 7A. As shown in FIG. 7A, the battery pack is discharged, and the positive electrode B+ of the battery pack, the first winding, the first semiconductor switching device S3, and the negative electrode B- of the battery pack form a closed loop. In this case, a current of the closed loop excites the first winding, and the current of the first winding increases, that is, the current of the first inductor L2 increases. Moreover, the current of the closed loop flows through an internal resistance of the battery pack, and generates Joule heat on the internal resistance of the battery pack. In other words, the battery pack may be discharged through the battery control circuit to heat the battery.

In a time period from *t*₆₂ to *t*₆₃, the control module 501 sends a low electrical level to a gate of the first semiconductor switching device S3, and sends a high electrical level to a gate of the second semiconductor switching device S4. In this case, for a partial equivalent circuit diagram of the battery control circuit shown in FIG. 5, refer to FIG. 7B. As shown in FIG. 7B, energy obtained by the first winding in the first inductor L2 when the battery pack is in the discharging state is released through the second winding in the first inductor L2. That is, the second winding, the positive electrode B+ of the battery pack, the negative electrode B- of the battery pack, and the second semiconductor switching device S4 form a closed loop to charge the battery pack. In this case, the second winding is demagnetized, and the current of the second winding decreases, that is, the current of the first inductor L2 decreases. Moreover, the current of the closed loop also flows through the internal resistance of the battery pack, and generates Joule heat on the internal resistance of the battery. In other words, the battery pack may be charged through the battery control circuit to heat the battery.

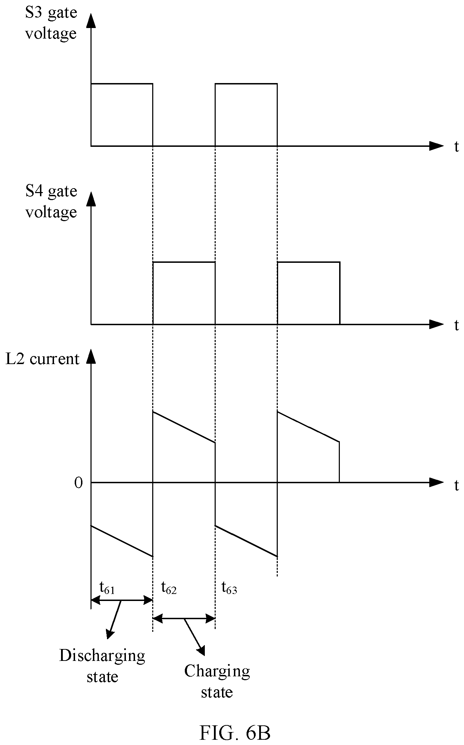

It may be understood that in this implementation of this application, the schematic diagram of the waveform of the battery control circuit may further be shown in FIG. 6B. On and off of the first semiconductor switching device S3 and the second semiconductor switching device S4 are controlled based on the schematic diagram of the waveform shown in FIG. 6B. Obtained equivalent circuit diagrams are still shown in FIG. 7A and FIG. 7B. A difference between the schematic diagrams of the waveforms shown in FIG. 6B and FIG. 6A is that the first inductors L2 are different. In FIG. 6B, the first semiconductor switching device S3 is controlled to be turned on before the current of the first inductor L2 decreases to 0, and the current of the first inductor L2 is a trapezoidal wave. This implementation of this application can reduce a current peak value in the battery control circuit, has a low requirement on a current stress of each semiconductor switching device, and has strong applicability.

This implementation of this application is another possible implementation of the battery control circuit. Because the first semiconductor switching device and the second semiconductor switching device are alternately turned on, heating of the semiconductor switching devices is even, safety of the battery control circuit is good, and reliability is high.

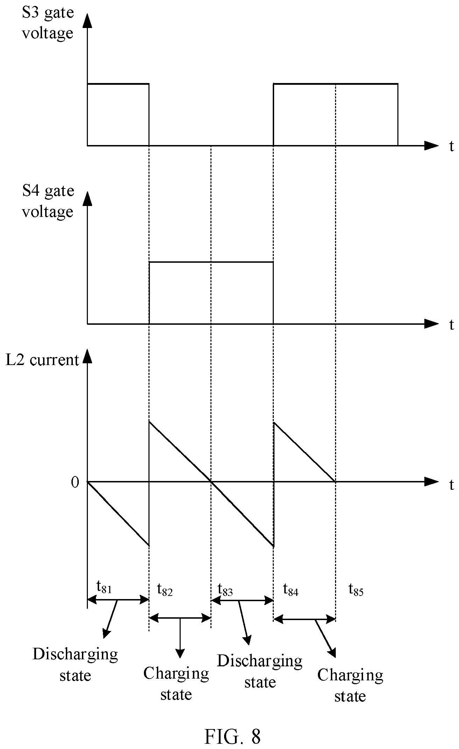

Optionally, FIG. 8 is another schematic diagram of a waveform of a battery control circuit according to an implementation of this application. As shown in FIG. 8, when the first semiconductor switching device S3 is turned on and the second semiconductor switching device S4 is turned off, the battery pack may be in the discharging state or the charging state; and when the second semiconductor switching device S4 is turned on and the first semiconductor switching device S3 is turned off, the battery pack may be in the charging state or the discharging state.

During specific implementation, in a time period from *t*₈₁ to *t*₈₂, the control module 501 sends a high electrical level to a third terminal (that is, a gate) of the first semiconductor switching device S3, and sends a low electrical level to a third terminal (that is, a gate) of the second semiconductor switching device S4, and the battery pack is in the discharging state. In this case, a partial equivalent circuit diagram of the battery control circuit shown in FIG. 5 is still shown in FIG. 7A. A current direction in which the battery pack is discharged is a first direction. That is, the positive electrode B+ of the battery pack, the first winding, the first semiconductor switching device S3, and the negative electrode B- of the battery pack form a closed loop. In this case, a current of the closed loop excites the first winding, and the current of the first winding increases, that is, the current of the first inductor L2 increases.

In a time period from *t*₈₂ to *t*₈₃, the control module 501 sends a low electrical level to a gate of the first semiconductor switching device S3, and sends a high electrical level to a gate of the second semiconductor switching device S4, and the battery pack is in the charging state. In this case, a partial equivalent circuit diagram of the battery control circuit shown in FIG. 5 is still shown in FIG. 7B. Energy obtained by the first winding in the first inductor L2 when the battery pack is in the discharging state is released through the second winding in the first inductor L2. A current direction in which the battery pack is charged is a second direction. That is, the second winding, the positive electrode B+ of the battery pack, the negative electrode B- of the battery pack, and the second semiconductor switching device S4 form a closed loop to charge the battery pack. In this case, the second winding is demagnetized, and the current of the second winding decreases, that is, the current of the first inductor L2 decreases. It should be understood that the first direction is opposite to the second direction.

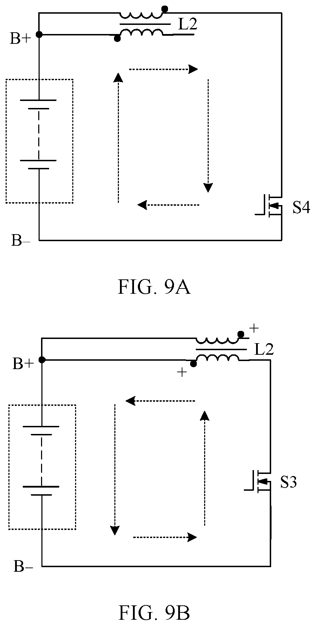

In a time period from *t*₈₃ to *t*₈₄, the control module 501 still sends a low electrical level to the gate of the first semiconductor switching device S3, and sends a high electrical level to the gate of the second semiconductor switching device S4, but the battery pack is in the discharging state. In this case, a partial equivalent circuit of the battery control circuit shown in FIG. 5 is shown in FIG. 9A. A current direction in which the battery pack is discharged is still a first direction. That is, the positive electrode B+ of the battery pack, the second winding, the second semiconductor switching device S4, and the negative electrode B- of the battery pack form a closed loop. In this case, a current of the closed loop excites the second winding, and the current of the second winding increases, that is, the current of the first inductor L2 increases.

In a time period from *t*₈₄ to *t*₈₅, the control module 501 sends a high electrical level to a gate of the first semiconductor switching device S3, and sends a low electrical level to a gate of the second semiconductor switching device S4, and the battery pack is in the charging state. In this case, a partial equivalent circuit of the battery control circuit shown in FIG. 5 is shown in FIG. 9B. Energy obtained by the second winding in the first inductor L2 when the battery pack is in the discharging state is released through the first winding in the first inductor L2. A current direction in which the battery pack is charged is a second direction. That is, the first winding, the positive electrode B+ of the battery pack, the negative electrode B- of the battery pack, and the first semiconductor switching device S3 form a closed loop to charge the battery pack. In this case, the first winding is demagnetized, and the current of the first winding decreases, that is, the current of the first inductor L2 decreases.

It may be understood that when the battery pack is in the discharging state, the current passes through an internal resistance of the battery pack along the first direction and generates Joule heat on the internal resistance of the battery; and when the battery pack is in the charging state, the current passes through the internal resistance of the battery pack along the second direction and generates Joule heat on the internal resistance of the battery. In other words, charging and discharging are implemented by using energy of the battery pack. Currents of charging and discharging both generate heat on an internal resistance of the battery pack to heat the battery. Therefore, heating efficiency is high.

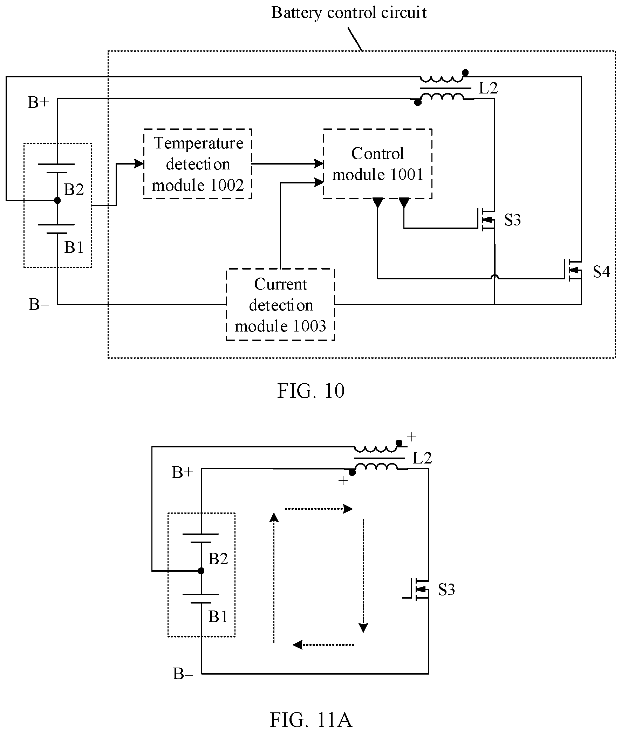

Optionally, in some feasible implementations, FIG. 10 is another circuit principle diagram of a battery control circuit according to an implementation of this application. As shown in FIG. 10, the battery pack includes a first electrochemical cell B1 and a second electrochemical cell B2, and a positive electrode of the first electrochemical cell B1 is coupled to a negative electrode of the second electrochemical cell B2. The battery control circuit in this implementation of this application includes a first inductor L2, a first semiconductor switching device S3, and a second semiconductor switching device S4, the first inductor L2 includes a first winding and a second winding, and a first terminal of the first winding and a first terminal of the second winding are dotted terminals.

During specific implementation, for example, the first semiconductor switching device S3 and the second semiconductor switching device S4 are MOSFETs. The first terminal of the first winding is coupled to a positive electrode (that is, a positive electrode B+ of the battery pack) of the second electrochemical cell B2, a second terminal of the first winding is coupled to a first terminal (that is, a drain) of the first semiconductor switching device S3, and a second terminal (that is, a source) of the first semiconductor switching device S3 is coupled to a negative electrode (that is, a negative electrode B- of the battery pack) of the first electrochemical cell B1. A second terminal of the second winding is coupled to the positive electrode of the first electrochemical cell B 1, the first terminal of the second winding is coupled to a first terminal (that is, a drain) of the second semiconductor switching device S4, and a second terminal (that is, a source) of the second semiconductor switching device S4 is coupled to the negative electrode (that is, the negative electrode B- of the battery pack) of the first electrochemical cell B1.

The battery control circuit in this implementation of this application further includes at least one of a control module 1001, a temperature detection module 1002, and a current detection module 1003. For specific descriptions, refer to the implementation described above with reference to FIG. 5. Details are not described herein again.

In some feasible implementations, when the first semiconductor switching device S3 is turned on and the second semiconductor switching device S4 is turned off, the positive electrode B+ of the battery pack, the first winding, the first semiconductor switching device S3, and the negative electrode B- of the battery pack may form a closed loop. In this case, the first electrochemical cell B1 and the second electrochemical cell B2 are both in a discharging state, and a current of the first winding increases along a first direction. When the second semiconductor switching device S4 is turned on and the first semiconductor switching device S3 is turned off, energy obtained by the first winding in the first inductor L2 when the battery pack is in the discharging state is released through the second winding in the first inductor L2. That is, the second winding, the positive electrode of the first electrochemical cell B 1, the negative electrode of the first electrochemical cell B 1, and the second semiconductor switching device S4 form a closed loop, and the second winding charges the first electrochemical cell B 1. In this case, the first electrochemical cell B 1 is in a charging state, and a current of the second winding decreases along a second direction. The first direction is opposite to the second direction.

Further, when the first semiconductor switching device S3 is turned on and the second semiconductor switching device S4 is turned off, the positive electrode B+ of the battery pack, the first winding, the first semiconductor switching device S3, and the negative electrode B- of the battery pack may form a closed loop. In this case, the first electrochemical cell B 1 and the second electrochemical cell B2 are both in a discharging state, and a current of the first winding increases along a first direction. When the second semiconductor switching device S4 is turned on and the first semiconductor switching device S3 is turned off, energy obtained by the first winding in the first inductor L2 when the battery pack is in the discharging state is released through the second winding in the first inductor L2. That is, the second winding, the positive electrode of the first electrochemical cell B1, the negative electrode of the first electrochemical cell B 1, and the second semiconductor switching device S4 form a closed loop, and the second winding charges the first electrochemical cell B 1. In this case, the first electrochemical cell B 1 is in a charging state, and a current of the second winding decreases along a second direction. In addition, after the current of the second winding decreases to a first preset threshold, for example, 0, the control module 1001 does not change an on/off state of each semiconductor switching device, to be specific, the second semiconductor switching device S4 is turned on, the first semiconductor switching device S3 is turned off, and the first electrochemical cell B 1 is in the discharging state. In this case, the positive electrode of the first electrochemical cell B 1, the second semiconductor switching device S4, and the negative electrode of the first electrochemical cell B 1 form a closed loop, and the current of the second winding increases along the first direction. In addition, after the current of the second winding increases to the second preset threshold, for example, 10 A, the first semiconductor switching device S3 is turned on, the second semiconductor switching device S4 is turned off, and energy obtained by the second winding of the first inductor L2 when the first electrochemical cell B 1 is in the discharging state is released through the first winding of the first inductor L2. That is, the first winding, the positive electrode B+ of the battery pack, the negative electrode B- of the battery pack, and the first semiconductor switching device S3 form a closed loop. The first winding charges the battery pack. In this case, the battery pack is in a charging state, and a current of the first winding decreases along a second direction.

In this implementation of this application, in one discharging and discharging cycle, the first electrochemical cell and the second electrochemical cell are simultaneously discharged, and only the first electrochemical cell is charged; or only the first electrochemical cell is discharged, and the first electrochemical cell and the second electrochemical cell are simultaneously charged. In this case, an amount of heat generated by the first electrochemical cell is greater than an amount of heat generated by the second electrochemical cell. This implementation of this application may be applicable to different electrochemical cells. For example, a temperature withstand of the first electrochemical cell is less than that of the second electrochemical cell, and an internal resistance of the first electrochemical cell is greater than that of the second electrochemical cell. In other words, this implementation of this application can better adapt to differences between electrochemical cells and has good applicability.

It may be understood that, in this implementation of this application, an example in which the battery pack includes two electrochemical cell is used. In specific application, the battery pack may alternatively include more than two electrochemical cells. For example, the positive electrode of the first electrochemical cell is coupled to the negative electrode of the second electrochemical cell, and the positive electrode of the second electrochemical cell is coupled to a negative electrode of a third electrochemical cell. A positive electrode of the third electrochemical cell is the positive electrode of the battery pack, and the negative electrode of the first electrochemical cell is the negative electrode of the battery pack. In this case, the second terminal of the second winding may be connected to the positive electrode of the first electrochemical cell or the positive electrode of the second electrochemical cell (not shown in the figure).

A difference between this implementation of this application and the implementation described above with reference to FIG. 5 is that the second terminal of the second winding in this implementation of this application is coupled to the positive electrode of the first electrochemical cell B 1 instead of the positive electrode of the battery pack. How the battery control circuit shown in FIG. 10 charges and discharges an electrochemical cell in a battery pack is described below with reference to FIG. 11A to FIG. 11D.

First, it should be noted that the schematic diagrams of the waveforms shown in FIG. 6A, FIG. 6B, and FIG. 8 are all applicable to the battery control circuit in this the implementation of this application.

In some feasible implementations, with reference to the schematic diagram of the waveform shown in FIG. 6A, in a time period from *t*₆₁ to *t*₆₂, the control module 1001 sends a high electrical level to a third terminal (that is, a gate) of the first semiconductor switching device S3, and sends a low electrical level to a third terminal (that is, a gate) of the second semiconductor switching device S4. In this case, for a partial equivalent circuit diagram of the battery control circuit shown in FIG. 10, refer to FIG. 11A. As shown in FIG. 11A, the first electrochemical cell B 1 and the second electrochemical cell B2 are discharged, and the positive electrode B+ of the battery pack, the first winding, the first semiconductor switching device S3, and the negative electrode B- of the battery pack form a closed loop. In this case, a current of the closed loop excites the first winding, and the current of the first winding increases, that is, the current of the first inductor L2 increases. Moreover, the current of the closed loop flows through an internal resistance of the battery pack, and generates Joule heat on the internal resistance of the battery pack. In other words, the battery pack may be discharged through the battery control circuit to heat the first electrochemical cell B 1 and the second electrochemical cell B2.

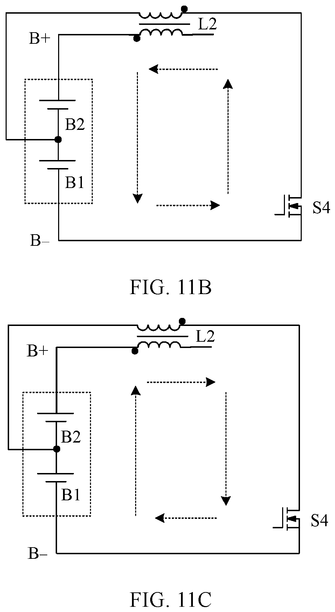

In a time period from *t*₆₂ to *t*₆₃, the control module 1001 sends a low electrical level to a gate of the first semiconductor switching device S3, and sends a high electrical level to a gate of the second semiconductor switching device S4. In this case, for a partial equivalent circuit diagram of the battery control circuit shown in FIG. 10, refer to FIG. 11B. As shown in FIG. 11B, the second winding, the positive electrode of the first electrochemical cell B 1, the negative electrode of the first electrochemical cell B 1, and the second semiconductor switching device S4 form a closed loop to charge the first electrochemical cell B 1. In this case, the second winding is demagnetized, and the current of the second winding decreases, that is, the current of the first inductor L2 decreases. Moreover, a current of the closed loop flows through an internal resistance of the first electrochemical cell B 1, and generates Joule heat on the internal resistance of the first electrochemical cell B 1. In other words, the battery control circuit heats only the first electrochemical cell B1 in a time period from *t*₆₂ to *t*₆₃.

Optionally, in some feasible implementations, with reference to the schematic diagram of the waveform shown in FIG. 6B, the control module 1001 may control on and off of the first semiconductor switching device S3 and the second semiconductor switching device S4 based on the schematic diagram of the waveform shown in FIG. 6B. Obtained equivalent circuit diagrams are still shown in FIG. 11A and FIG. 11B. Details are not described herein again.

Optionally, in some feasible implementations, with reference to the schematic diagram of the waveform shown in FIG. 8, when the first semiconductor switching device S3 is turned on and the second semiconductor switching device S4 is turned off, the battery pack may be in the discharging state or the charging state; and when the second semiconductor switching device S4 is turned on and the first semiconductor switching device S3 is turned off, the first electrochemical cell B 1 may be in the charging state or the discharging state.

During specific implementation, in a time period from *t*₈₁ to *t*₈₂, the control module 1001 sends a high electrical level to a third terminal (that is, a gate) of the first semiconductor switching device S3, and sends a low electrical level to a third terminal (that is, a gate) of the second semiconductor switching device S4, and the first electrochemical cell B1 and the second electrochemical cell B2 are both in the discharging state. In this case, a partial equivalent circuit diagram of the battery control circuit shown in FIG. 10 is still shown in FIG. 11A. A current direction in which the battery pack is discharged is a first direction. That is, the positive electrode B+ of the battery pack, the first winding, the first semiconductor switching device S3, and the negative electrode B- of the battery pack form a closed loop. In this case, a current of the closed loop excites the first winding, and the current of the first winding increases, that is, the current of the first inductor L2 increases.

In a time period from *t*₈₂ to *t*₈₃, the control module 1001 sends a low electrical level to a gate of the first semiconductor switching device S3, and sends a high electrical level to a gate of the second semiconductor switching device S4, and the first electrochemical cell B1 is in the charging state. In this case, a partial equivalent circuit diagram of the battery control circuit shown in FIG. 10 is still shown in FIG. 11B. Energy obtained by the first winding in the first inductor L2 when the battery pack is in the discharging state is released through the second winding in the first inductor L2. A current direction in which the battery pack is charged is a second direction. That is, the second winding, the positive electrode of the first electrochemical cell B 1, the negative electrode of the first electrochemical cell B 1, and the second semiconductor switching device S4 form a closed loop to charge the first electrochemical cell B 1. In this case, the second winding is demagnetized, and the current of the second winding decreases, that is, the current of the first inductor L2 decreases. It should be understood that the first direction is opposite to the second direction.

In a time period from *t*₈₃ to *t*₈₄, the control module 1001 still sends a low electrical level to the gate of the first semiconductor switching device S3, and sends a high electrical level to the gate of the second semiconductor switching device S4, but the first electrochemical cell B1 is in the discharging state. In this case, for a partial equivalent circuit of the battery control circuit shown in FIG. 10 is shown in FIG. 11C. A current direction in which the first electrochemical cell B 1 is discharged is still a first direction. That is, the positive electrode of the first electrochemical cell B1, the second winding, the second semiconductor switching device S4, and the negative electrode of the first electrochemical cell B1 form a closed loop. In this case, a current of the closed loop excites the second winding, and the current of the second winding increases, that is, the current of the first inductor L2 increases.

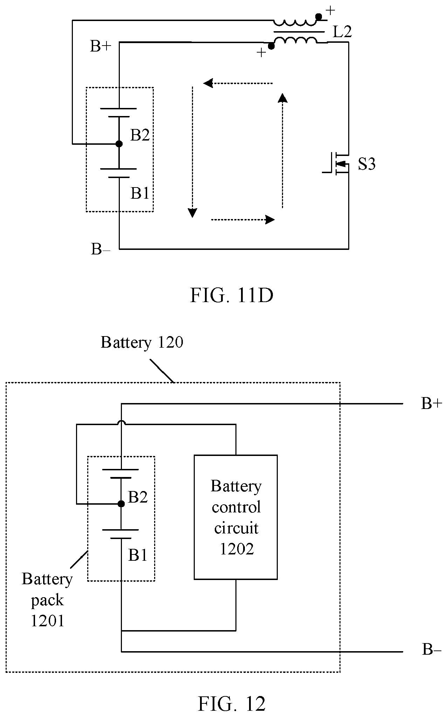

In a time period from *t*₈₄ to *t*₈₅, the control module 1001 sends a high electrical level to a gate of the first semiconductor switching device S3, and sends a low electrical level to a gate of the second semiconductor switching device S4, and the first electrochemical cell B1 and the second electrochemical cell B2 are both in the charging state. In this case, a partial equivalent circuit of the battery control circuit shown in FIG. 10 is shown in FIG. 11D. Energy obtained by the second winding in the first inductor L2 when the first electrochemical cell B1 is in the discharging state is released through the first winding in the first inductor L2. A current direction in which the battery pack is charged is a second direction. That is, the first winding, the positive electrode B+ of the battery pack, the negative electrode B- of the battery pack, and the first semiconductor switching device S3 form a closed loop to charge the battery pack. In this case, the first winding is demagnetized, and the current of the first winding decreases, that is, the current of the first inductor L2 decreases.

It may be understood that when the first electrochemical cell B1 and the second electrochemical cell B2 are in the discharging state, Joule heat is generated on internal resistances of the first electrochemical cell B1 and the second electrochemical cell B2; and when the first electrochemical cell B1 is in the charging state, Joule heat is generated only on an internal resistance of the first electrochemical cell B1.

In some feasible implementations, the battery control circuit described above with reference to FIG. 10 to FIG. 11D and the battery may be encapsulated together as a part of the battery. FIG. 12 shows another battery according to an implementation of this application. As shown in FIG. 12, an intermediate tap is drawn from a battery pack 1201, and is connected to a terminal of a battery control circuit 1202. Another terminal of the battery control circuit 1202 is connected to a negative electrode of the battery pack 1201.

An implementation of this application further provides an electronic device. The electronic device is provided with a load and the battery shown in FIG. 1 or FIG. 12. The battery is configured with a battery heating function. In other words, the battery is configured with any battery control circuit described above. For example, the electronic device may be applicable to a communication system, and the load may be specifically implemented as a base station device in communication. The electronic device may alternatively be applicable to a photovoltaic system, and the load may be specifically implemented as a photovoltaic inverter. The electronic device may alternatively be specifically implemented as an electric vehicle, a headset, or the like.

It should be noted that the foregoing terms "first" and "second" are used only for description purposes, and cannot be understood as indicating or implying relative importance.

The units described as separate components may or may not be physically separated, and the components shown as units may or may not be physical units, that is, may be located in one place, or may be distributed on a plurality of network elements. Some or all of the units may be selected based on actual requirements to achieve the objectives of the solutions in the implementations.

The scope of protection is defined by the appended claims.

## Claims

1. A battery control circuit (102), wherein the battery control circuit is adapted to be connected in parallel between a positive electrode (B+) and a negative electrode (B-) of a battery pack (101), and the battery control circuit comprises a first inductor (L1), a first semiconductor switching device (S1), a second semiconductor switching device (S2), a first diode (D1), and a second diode (D2);
a first terminal of the first semiconductor switching device and a cathode of the first diode are both arranged to be coupled to the positive electrode of the battery pack, and a second terminal of the first semiconductor switching device is coupled to a terminal of the first inductor and a cathode of the second diode; and
an anode of the first diode is coupled to another terminal of the first inductor and a first terminal of the second semiconductor switching device, and a second terminal of the second semiconductor switching device and an anode of the second diode are both arranged to be coupled to the negative electrode of the battery pack, wherein the battery control circuit further comprises a control module (201) coupled to a third terminal of the first semiconductor switching device and a third terminal of the second semiconductor switching device, wherein the control module is configured to simultaneously turn on the first semiconductor switching device and the second semiconductor switching device when the battery pack is in a discharging state, or to simultaneously turn off the first semiconductor switching device and the second semiconductor switching device when the battery pack is in a charging state;
wherein the battery control circuit further comprises a temperature detection module (202), and the temperature detection module is configured to: detect a temperature of the battery pack, and send the temperature of the battery pack to the control module; **characterized in that**
the control module is configured to: when the temperature of the battery pack is lower than a preset temperature, control the first semiconductor switching device and the second semiconductor switching device to simultaneously switch between an on state and an off state at a preset frequency.

2. The battery control circuit according to claim 1, wherein the battery control circuit further comprises a current detection module (203), and the current detection module is configured to detect a current of the first inductor; and
the control module is configured to: obtain the current of the first inductor detected by the current detection module, and determine the preset frequency.

3. The battery control circuit according to claim 2, wherein the control module is further configured to determine the preset frequency based on a time interval between a first moment and a second moment, the first moment is a moment at which the control module is configured to detect that the current of the first inductor increases to a first preset current, and the second moment is a moment at which the control module is configured to detect that the current of the first inductor decreases to a second preset current.

4. A battery control circuit, wherein the battery control circuit is adapted to be connected in parallel between a positive electrode (B+) and a negative electrode (B-) of a battery pack, the battery control circuit comprises a first inductor (L2), a first semiconductor switching device (S3), and a second semiconductor switching device (S4), the first inductor comprises a first winding and a second winding, and a first terminal of the first winding and a first terminal of the second winding are dotted terminals wherein the first inductor is arranged and configured such that alternating currents are separately supplied to the first terminal of the first winding and
the first terminal of the second winding to generate magnetic fields such that flux directions of magnetic fields generated by the two windings are the same;
the first terminal of the first winding is arranged to be coupled to the positive electrode of the battery pack, a second terminal of the first winding is coupled to a first terminal of the first semiconductor switching device, and a second terminal of the first semiconductor switching device is arranged to be coupled to the negative electrode of the battery pack; and
a second terminal of the second winding is arranged to be coupled to the positive electrode of the battery pack, the first terminal of the second winding is coupled to a first terminal of the second semiconductor switching device, and a second terminal of the second semiconductor switching device is arranged to be coupled to the negative electrode of the battery pack,
wherein the battery control circuit further comprises a control module (501), and the control module is coupled to a third terminal of the first semiconductor switching device and a third terminal of the second semiconductor switching device; wherein the control module is configured to alternately turned on the first semiconductor switching device and the second semiconductor switching device;
**characterized in that**
the battery control circuit further comprises a temperature detection module (502), and the temperature detection module is configured to: detect a temperature of the battery pack, and send the temperature of the battery pack to the control module; and
the control module is configured to: when the temperature of the battery pack is lower than a preset temperature, control, at a preset frequency, the first semiconductor switching device and the second semiconductor switching device to be alternately turned on.

5. The battery control circuit according to claim 4, wherein the control module is configured such that the first semiconductor switching device is turned on and the second semiconductor switching device is turned off when the battery pack is in a discharging state; or such that the second semiconductor switching device is turned on and the first semiconductor switching device is turned off, when the battery pack is in a charging state.

6. The battery control circuit according to claim 4, wherein when the first semiconductor switching device is turned on and the second semiconductor switching device is turned off, if a current direction of the first winding is a first direction, the battery pack is configured to be in a discharging state;
when the second semiconductor switching device is turned on and the first semiconductor switching device is turned off, if a current direction of the second winding is a second direction, the battery pack is configured to be in a charging state;
when the second semiconductor switching device is turned on and the first semiconductor switching device is turned off, if a current direction of the second winding is a first direction, the battery pack is configured to be in a discharging state; or
when the first semiconductor switching device is turned on and the second semiconductor switching device is turned off, if a current direction of the first winding is a second direction, the battery pack is configured to be in a charging state, wherein the first direction is opposite to the second direction.

7. A battery control circuit, wherein the battery control circuit is adapted to be applied to a battery pack, which comprises a first electrochemical cell (B 1) and a second electrochemical cell (B2), wherein
a positive electrode of the first electrochemical cell is coupled to a negative electrode of the second electrochemical cell;
the battery control circuit comprises a first inductor (L2), a first semiconductor switching device (S3), and a second semiconductor switching device (S4), the first inductor comprises a first winding and a second winding, and a first terminal of the first winding and a first terminal of the second winding are dotted terminals wherein the first inductor is arranged and configured such that alternating currents are separately supplied to the first terminal of the first winding and the first terminal of the second winding to generate magnetic fields such that flux directions of magnetic fields generated by the two windings are the same;
the first terminal of the first winding is arranged to be coupled to a positive electrode of the second electrochemical cell, a second terminal of the first winding is coupled to a first terminal of the first semiconductor switching device, and a second terminal of the first semiconductor switching device is arranged to be coupled to a negative electrode of the first electrochemical cell; and
a second terminal of the second winding is arranged to be coupled to the positive electrode of the first electrochemical cell, the first terminal of the second winding is coupled to a first terminal of the second semiconductor switching device, and a second terminal of the second semiconductor switching device is arranged to be coupled to the negative electrode of the first electrochemical cell,
wherein, the battery control circuit includes a control module (1001), and the control module is coupled to a third terminal of the first semiconductor switching device and a third terminal of the second semiconductor switching device; wherein the control module is configured to alternately turned on the first semiconductor switching device and the second semiconductor switching device; and
the battery control circuit further includes a temperature detection module (1002), wherein the temperature detection module is configured to: detect temperatures of the first electrochemical cell and the second electrochemical cell, and send the temperatures of the first electrochemical cell and the second electrochemical cell to the control module; **characterized in that**
the control module is configured to: when a temperature of at least one of the first electrochemical cell and the second electrochemical cell is lower than a preset temperature, control, at a preset frequency, the first semiconductor switching device and the second semiconductor switching device to be alternately turned on.

8. The battery control circuit according to claim 7, wherein the control module is configured such that the first semiconductor switching device is turned on and the second semiconductor switching device is turned off, when the first electrochemical cell and the second electrochemical cell are in a discharging state; or such that the second semiconductor switching device is turned on and the first semiconductor switching device is turned off, when the first electrochemical cell is in a charging state.

9. The battery control circuit according to claim 7, wherein when the first semiconductor switching device is turned on and the second semiconductor switching device is turned off, if a current direction of the first winding is a first direction, the first electrochemical cell and the second electrochemical cell are both configured to be in a discharging state;
when the second semiconductor switching device is turned on and the first semiconductor switching device is turned off, if a current direction of the second winding is a second direction, the first electrochemical cell is configured to be in a charging state;
when the second semiconductor switching device is turned on and the first semiconductor switching device is turned off, if a current direction of the second winding is a first direction, the first electrochemical cell is configured to be in a discharging state; or
when the first semiconductor switching device is turned on and the second semiconductor switching device is turned off, if a current direction of the first winding is a second direction, the first electrochemical cell and the second electrochemical cell are in a charging state.

10. A battery, wherein the battery comprises a battery pack and the battery control circuit according to any one of claims 1 to 9.

11. An electronic device, wherein the electronic device comprises a load and the battery according to claim 10, and the battery is configured to supply power to the load.

## Patentansprüche

1. Batteriesteuerschaltung (102), wobei die Batteriesteuerschaltung ausgelegt ist, um parallel zwischen einer positiven Elektrode (B+) und einer negativen Elektrode (B-) eines Batteriepacks (101) geschaltet zu werden, und die Batteriesteuerschaltung einen ersten Induktor (L1), eine erste Halbleiterschaltvorrichtung (S1), eine zweite Halbleiterschaltvorrichtung (S2), eine erste Diode (D1) und eine zweite Diode (D2) umfasst;
ein erster Anschluss der ersten Halbleiterschaltvorrichtung und eine Kathode der ersten Diode beide angeordnet sind, um mit der positiven Elektrode des Batteriepacks gekoppelt zu werden, und ein zweiter Anschluss der ersten Halbleiterschaltvorrichtung mit einem Anschluss des ersten Induktors und einer Kathode der zweiten Diode gekoppelt ist; und
eine Anode der ersten Diode mit einem anderen Anschluss des ersten Induktors und einem ersten Anschluss der zweiten Halbleiterschaltvorrichtung gekoppelt ist und ein zweiter Anschluss der zweiten Halbleiterschaltvorrichtung und eine Anode der zweiten Diode beide angeordnet sind, um mit der negativen Elektrode des Batteriepacks gekoppelt zu werden, wobei die Batteriesteuerschaltung ferner ein Steuermodul (201) umfasst, das mit einem dritten Anschluss der ersten Halbleiterschaltvorrichtung und einem dritten Anschluss der zweiten Halbleiterschaltvorrichtung gekoppelt ist, wobei das Steuermodul konfiguriert ist, um gleichzeitig die erste Halbleiterschaltvorrichtung und die zweite Halbleiterschaltvorrichtung einzuschalten, wenn sich das Batteriepack in einem Entladezustand befindet, oder um gleichzeitig die erste Halbleiterschaltvorrichtung und die zweite Halbleiterschaltvorrichtung auszuschalten, wenn sich das Batteriepack in einem Ladezustand befindet;
wobei die Batteriesteuerschaltung ferner ein Temperaturerkennungsmodul (202) umfasst und das Temperaturerkennungsmodul konfiguriert ist, um: eine Temperatur des Batteriepacks zu erkennen und die Temperatur des Batteriepacks an das Steuermodul zu senden; **dadurch gekennzeichnet, dass**
das Steuermodul konfiguriert ist, um: wenn die Temperatur des Batteriepacks niedriger als eine voreingestellte Temperatur ist, die erste Halbleiterschaltvorrichtung und die zweite Halbleiterschaltvorrichtung zu steuern, um gleichzeitig mit einer voreingestellten Frequenz zwischen einem Ein-Zustand und einem Aus-Zustand umzuschalten.

2. Batteriesteuerschaltung nach Anspruch 1, wobei die Batteriesteuerschaltung ferner ein Stromerkennungsmodul (203) umfasst und das Stromerkennungsmodul konfiguriert ist, um einen Strom des ersten Induktors zu erkennen; und
das Steuermodul konfiguriert ist, um: den durch das Stromerkennungsmodul erkannten Strom des ersten Induktors zu erlangen und die voreingestellte Frequenz zu bestimmen.

3. Batteriesteuerschaltung nach Anspruch 2, wobei das Steuermodul ferner konfiguriert ist, um die voreingestellte Frequenz basierend auf einem Zeitintervall zwischen einem ersten Moment und einem zweiten Moment zu bestimmen, wobei das erste Moment ein Moment ist, in welchem das Steuermodul konfiguriert ist, um zu erkennen, dass der Strom des ersten Induktors auf einen ersten voreingestellten Strom ansteigt, und das zweite Moment ein Moment ist, in welchem das Steuermodul konfiguriert ist, um zu erkennen, dass der Strom des ersten Induktors auf einen zweiten voreingestellten Strom absinkt.

4. Batteriesteuerschaltung, wobei die Batteriesteuerschaltung ausgelegt ist, um parallel zwischen einer positiven Elektrode (B+) und einer negativen Elektrode (B-) eines Batteriepacks geschaltet zu werden, die Batteriesteuerschaltung einen ersten Induktor (L2), eine erste Halbleiterschaltvorrichtung (S3) und eine zweite Halbleiterschaltvorrichtung (S4) umfasst, der erste Induktor eine erste Wicklung und eine zweite Wicklung umfasst und ein erster Anschluss der ersten Wicklung und ein erster Anschluss der zweiten Wicklung gepunktete Anschlüsse sind, wobei der erste Induktor derart angeordnet und konfiguriert ist, dass Wechselströme dem ersten Anschluss der ersten Wicklung und dem ersten Anschluss der zweiten Wicklung getrennt zugeführt werden, um Magnetfelder derart zu generieren, dass die Flussrichtungen von durch die zwei Wicklungen generierten Magnetfeldern gleich sind;
der erste Anschluss der ersten Wicklung angeordnet ist, um mit der positiven Elektrode des Batteriepacks gekoppelt zu werden, ein zweiter Anschluss der ersten Wicklung mit einem ersten Anschluss der ersten Halbleiterschaltvorrichtung gekoppelt ist und ein zweiter Anschluss der ersten Halbleiterschaltvorrichtung angeordnet ist, um mit der negativen Elektrode des Batteriepacks gekoppelt zu werden; und ein zweiter Anschluss der zweiten Wicklung angeordnet ist, um mit der positiven Elektrode des Batteriepacks gekoppelt zu werden, der erste Anschluss der zweiten Wicklung mit einem ersten Anschluss der zweiten Halbleiterschaltvorrichtung gekoppelt ist und ein zweiter Anschluss der zweiten Halbleiterschaltvorrichtung angeordnet ist, um mit der negativen Elektrode des Batteriepacks gekoppelt zu werden, wobei die Batteriesteuerschaltung ferner ein Steuermodul (501) umfasst und das Steuermodul mit einem dritten Anschluss der ersten Halbleiterschaltvorrichtung und einem dritten Anschluss der zweiten Halbleiterschaltvorrichtung gekoppelt ist; wobei das Steuermodul konfiguriert ist, um abwechselnd die erste Halbleiterschaltvorrichtung und die zweite Halbleiterschaltvorrichtung einzuschalten;
**dadurch gekennzeichnet, dass**
die Batteriesteuerschaltung ferner ein Temperaturerkennungsmodul (502) umfasst und das Temperaturerkennungsmodul konfiguriert ist, um: eine Temperatur des Batteriepacks zu erkennen und die Temperatur des Batteriepacks an das Steuermodul zu senden; und
das Steuermodul konfiguriert ist, um: wenn die Temperatur des Batteriepacks niedriger als eine voreingestellte Temperatur ist, die erste Halbleiterschaltvorrichtung und die zweite Halbleiterschaltvorrichtung mit einer voreingestellten Frequenz zu steuern, um abwechselnd eingeschaltet zu werden.

5. Batteriesteuerschaltung nach Anspruch 4, wobei das Steuermodul derart konfiguriert ist, dass die erste Halbleiterschaltvorrichtung eingeschaltet ist und die zweite Halbleiterschaltvorrichtung ausgeschaltet ist, wenn sich das Batteriepack in einem Entladezustand befindet; oder
derart, dass die zweite Halbleiterschaltvorrichtung eingeschaltet ist und die erste Halbleiterschaltvorrichtung ausgeschaltet ist, wenn sich das Batteriepack in einem Ladezustand befindet.

6. Batteriesteuerschaltung nach Anspruch 4, wobei das Batteriepack, wenn die erste Halbleiterschaltvorrichtung eingeschaltet ist und die zweite Halbleiterschaltvorrichtung ausgeschaltet ist, falls eine Stromrichtung der ersten Wicklung eine erste Richtung ist, konfiguriert ist, um sich in einem Entladezustand zu befinden;
das Batteriepack, wenn die zweite Halbleiterschaltvorrichtung eingeschaltet ist und die erste Halbleiterschaltvorrichtung ausgeschaltet ist, falls eine Stromrichtung der zweiten Wicklung eine zweite Richtung ist, konfiguriert ist, um sich in einem Ladezustand zu befinden;
das Batteriepack, wenn die zweite Halbleiterschaltvorrichtung eingeschaltet ist und die erste Halbleiterschaltvorrichtung ausgeschaltet ist, falls eine Stromrichtung der zweiten Wicklung eine erste Richtung ist, konfiguriert ist, um sich in einem Entladezustand zu befinden; oder
das Batteriepack, wenn die erste Halbleiterschaltvorrichtung eingeschaltet ist und die zweite Halbleiterschaltvorrichtung ausgeschaltet ist, falls eine Stromrichtung der ersten Wicklung eine zweite Richtung ist, konfiguriert ist, um sich in einem Ladezustand zu befinden, wobei die erste Richtung der zweiten Richtung entgegengesetzt ist.

7. Batteriesteuerschaltung, wobei die Batteriesteuerschaltung ausgelegt ist, um auf ein Batteriepack angewendet zu werden, welches eine erste elektrochemische Zelle (B1) und eine zweite elektrochemische Zelle (B2) umfasst, wobei eine positive Elektrode der ersten elektrochemischen Zelle mit einer negativen Elektrode der zweiten elektrochemischen Zelle gekoppelt ist;
die Batteriesteuerschaltung einen ersten Induktor (L2), eine erste Halbleiterschaltvorrichtung (S3) und eine zweite Halbleiterschaltvorrichtung (S4) umfasst,
der erste Induktor eine erste Wicklung und eine zweite Wicklung umfasst und ein erster Anschluss der ersten Wicklung und ein erster Anschluss der zweiten Wicklung gepunktete Anschlüsse sind, wobei der erste Induktor derart angeordnet und konfiguriert ist, dass Wechselströme dem ersten Anschluss der ersten Wicklung und dem ersten Anschluss der zweiten Wicklung getrennt zugeführt zu werden, um Magnetfelder derart zu generieren, dass die Flussrichtungen von durch die zwei Wicklungen generierten Magnetfelder gleich sind;
der erste Anschluss der ersten Wicklung angeordnet ist, um mit einer positiven Elektrode der zweiten elektrochemischen Zelle gekoppelt zu werden, ein zweiter Anschluss der ersten Wicklung mit einem ersten Anschluss der ersten Halbleiterschaltvorrichtung gekoppelt ist und ein zweiter Anschluss der ersten Halbleiterschaltvorrichtung angeordnet ist, um mit einer negativen Elektrode der ersten elektrochemischen Zelle gekoppelt zu werden; und
ein zweiter Anschluss der zweiten Wicklung angeordnet ist, um mit der positiven Elektrode der ersten elektrochemischen Zelle gekoppelt zu werden, der erste Anschluss der zweiten Wicklung mit einem ersten Anschluss der zweiten Halbleiterschaltvorrichtung gekoppelt ist und ein zweiter Anschluss der zweiten Halbleiterschaltvorrichtung angeordnet ist, um mit der negativen Elektrode der ersten elektrochemischen Zelle gekoppelt zu werden,
wobei die Batteriesteuerschaltung ein Steuermodul (1001) beinhaltet und das Steuermodul mit einem dritten Anschluss der ersten Halbleiterschaltvorrichtung und einem dritten Anschluss der zweiten Halbleiterschaltvorrichtung gekoppelt ist;
wobei das Steuermodul konfiguriert ist, um abwechselnd die erste Halbleiterschaltvorrichtung und die zweite Halbleiterschaltvorrichtung einzuschalten; und
die Batteriesteuerschaltung ferner ein Temperaturerkennungsmodul (1002) beinhaltet, wobei das Temperaturerkennungsmodul konfiguriert ist, um: Temperaturen der ersten elektrochemischen Zelle und der zweiten elektrochemischen Zelle zu erkennen und die Temperaturen der ersten elektrochemischen Zelle und der zweiten elektrochemischen Zelle an das Steuermodul zu senden; **dadurch gekennzeichnet, dass**
das Steuermodul konfiguriert ist, um: wenn eine Temperatur der ersten elektrochemischen Zelle und der zweiten elektrochemischen Zelle niedriger als eine voreingestellte Temperatur ist, die erste Halbleiterschaltvorrichtung und die zweite Halbleiterschaltvorrichtung mit einer voreingestellten Frequenz zu steuern, um abwechselnd eingeschaltet zu werden.

8. Batteriesteuerschaltung nach Anspruch 7, wobei das Steuermodul derart konfiguriert ist, dass die erste Halbleiterschaltvorrichtung eingeschaltet ist und die zweite Halbleiterschaltvorrichtung ausgeschaltet ist, wenn sich die erste elektrochemische Zelle und die zweite elektrochemische Zelle in einem Entladezustand befinden; oder
derart, dass die zweite Halbleiterschaltvorrichtung eingeschaltet ist und die erste Halbleiterschaltvorrichtung ausgeschaltet ist, wenn sich die erste elektrochemische Zelle in einem Ladezustand befindet.

9. Batteriesteuerschaltung nach Anspruch 7, wobei die erste elektrochemische Zelle und die zweite elektrochemische Zelle, wenn die erste Halbleiterschaltvorrichtung eingeschaltet ist und die zweite Halbleiterschaltvorrichtung ausgeschaltet ist, falls eine Stromrichtung der ersten Wicklung eine erste Richtung ist, beide konfiguriert sind, um sich in einem Entladezustand zu befinden;
die erste elektrochemische Zelle, wenn die zweite Halbleiterschaltvorrichtung eingeschaltet ist und die erste Halbleiterschaltvorrichtung ausgeschaltet ist, falls eine Stromrichtung der zweiten Wicklung eine zweite Richtung ist, konfiguriert ist, um sich in einem Ladezustand zu befinden; die erste elektrochemische Zelle, wenn die zweite Halbleiterschaltvorrichtung eingeschaltet ist und die erste Halbleiterschaltvorrichtung ausgeschaltet ist, falls eine Stromrichtung der zweiten Wicklung eine erste Richtung ist, konfiguriert ist, um sich in einem Entladezustand zu befinden; oder
sich die erste elektrochemische Zelle und die zweite elektrochemische Zelle, wenn die erste Halbleiterschaltvorrichtung eingeschaltet ist und die zweite Halbleiterschaltvorrichtung ausgeschaltet ist, falls eine Stromrichtung der ersten Wicklung eine zweite Richtung ist, in einem Ladezustand befinden.

10. Batterie, wobei die Batterie ein Batteriepack und die Batteriesteuerschaltung nach einem der Ansprüche 1 bis 9 umfasst.

11. Elektronische Vorrichtung, wobei die elektronische Vorrichtung eine Last und die Batterie nach Anspruch 10 umfasst und die Batterie konfiguriert ist, um die Last mit Leistung zu versorgen.

## Revendications

1. Circuit de commande de batterie (102), dans lequel le circuit de commande de batterie est conçu pour être connecté en parallèle entre une électrode positive (B+) et une électrode négative (B-) d'un bloc-batterie (101), et le circuit de commande de batterie comprend une première inductance (L1), un premier dispositif de commutation à semi-conducteur (S1), un second dispositif de commutation à semi-conducteur (S2), une première diode (D1) et une second diode (D2) ;
une première borne du premier dispositif de commutation à semi-conducteur et une cathode de la première diode sont toutes deux agencées pour être couplées à l'électrode positive du bloc-batterie, et une deuxième borne du premier dispositif de commutation à semi-conducteur est couplée à une borne de la première inductance et à une cathode de la seconde diode ; et une anode de la première diode est couplée à une autre borne de la première inductance et à une première borne du second dispositif de commutation à semi-conducteur, et une seconde borne du second dispositif de commutation à semi-conducteur et une anode de la seconde diode sont toutes deux agencées pour être couplées à l'électrode négative du bloc-batterie, dans lequel le circuit de commande de batterie comprend en outre un module de commande (201) couplé à une troisième borne du premier dispositif de commutation à semi-conducteur et à une troisième borne du second dispositif de commutation à semi-conducteur, dans lequel le module de commande est configuré pour activer simultanément le premier dispositif de commutation à semi-conducteur et le second dispositif de commutation à semi-conducteur lorsque le bloc-batterie est dans un état de décharge, ou pour désactiver simultanément le premier dispositif de commutation à semi-conducteur et le second dispositif de commutation à semi-conducteur lorsque le bloc-batterie est dans un état de charge ;
dans lequel le circuit de commande de batterie comprend en outre un module de détection de température (202), et le module de détection de température est configuré pour : détecter une température du bloc-batterie et envoyer la température du bloc-batterie au module de commande ; **caractérisé en ce que** le module de commande est configuré pour : lorsque la température du bloc-batterie est inférieure à une température prédéfinie, commander le premier dispositif de commutation à semi-conducteur et le seconde dispositif de commutation à semi-conducteur pour commuter simultanément entre un état activé et un état désactivé à une fréquence préétablie.

2. Circuit de commande de batterie selon la revendication 1, dans lequel le circuit de commande de batterie comprend en outre un module de détection de courant (203), et le module de détection de courant est configuré pour détecter un courant de la première inductance ; et
le module de commande est configuré pour : obtenir le courant de la première inductance détecté par le module de détection de courant, et déterminer la fréquence préétablie.

3. Circuit de commande de batterie selon la revendication 2, dans lequel le module de commande est en outre configuré pour déterminer la fréquence préétablie sur la base d'un intervalle de temps entre un premier instant et un second instant, le premier instant est un instant auquel le module de commande est configuré pour détecter que le courant de la première inductance augmente jusqu'à un premier courant prédéfini, et le second instant est un instant auquel le module de commande est configuré pour détecter que le courant de la première inductance diminue jusqu'à un second courant prédéfini.

4. Circuit de commande de batterie, dans lequel le circuit de commande de batterie est conçu pour être connecté en parallèle entre une électrode positive (B+) et une électrode négative (B-) d'un bloc-batterie, le circuit de commande de batterie comprend une première inductance (L2), un premier dispositif de commutation à semi-conducteur (S3) et un second dispositif de commutation à semi-conducteur (S4), la première inductance comprend un premier enroulement et un second enroulement, et une première borne du premier enroulement et une première borne du second enroulement sont des bornes pointillées dans lequel la première inductance est agencée et configuré de sorte que des courants alternatifs sont fournis séparément à la première borne du premier enroulement et à la première borne du second enroulement pour générer des champs magnétiques de sorte que les directions de flux des champs magnétiques générés par les deux enroulements sont identiques ;
la première borne du premier enroulement est agencée pour être couplée à l'électrode positive du bloc-batterie, une seconde borne du premier enroulement est couplée à une première borne du premier dispositif de commutation à semi-conducteur, et une deuxième borne du premier dispositif de commutation à semi-conducteur est agencée pour être couplée à l'électrode négative du bloc-batterie ; et
la seconde borne du premier enroulement est agencée pour être couplée à l'électrode positive du bloc-batterie, la première borne du second enroulement est couplée à une première borne du second dispositif de commutation à semi-conducteur, et une seconde borne du second dispositif de commutation à semi-conducteur est agencée pour être couplée à l'électrode négative du bloc-batterie ;
dans lequel le circuit de commande de batterie comprend en outre un module de commande (501), et le module de commande est couplé à une troisième borne du premier dispositif de commutation à semi-conducteur et à une troisième borne du second dispositif de commutation à semi-conducteur ; dans lequel le module de commande est configuré pour activer alternativement le premier dispositif de commutation à semi-conducteur et le second dispositif de commutation à semi-conducteur ;
**caractérisé en ce que**
le circuit de commande de batterie comprend en outre un module de détection de température (502), et le module de détection de température est configuré pour : détecter une température du bloc-batterie et envoyer la température du bloc-batterie au module de commande ; et
le module de commande est configuré pour : lorsque la température du bloc-batterie est inférieure à une température prédéfinie, commander, à une fréquence préétablie, le premier dispositif de commutation à semi-conducteur et le second dispositif de commutation à semi-conducteur pour qu'ils soient activés alternativement.

5. Circuit de commande de batterie selon la revendication 4, dans lequel le module de commande est configuré de sorte que le premier dispositif de commutation à semi-conducteur est activé et le second dispositif de commutation à semi-conducteur est désactivé, lorsque le bloc-batterie est dans un état de décharge ; ou
de sorte que le second dispositif de commutation à semi-conducteur est activé et le premier dispositif de commutation à semi-conducteur est désactivé, lorsque le bloc-batterie est dans un état de charge.

6. Circuit de commande de batterie selon la revendication 4, dans lequel lorsque le premier dispositif de commutation à semi-conducteur est activé et que le second dispositif de commutation à semi-conducteur est désactivé, si une direction de courant du premier enroulement est une première direction, le bloc-batterie est configuré pour être dans un état de décharge ;
lorsque le second dispositif de commutation à semi-conducteur est activé et que le premier dispositif de commutation à semi-conducteur est désactivé, si une direction de courant du second enroulement est une seconde direction, le bloc-batterie est configuré pour être dans un état de charge ;
lorsque le second dispositif de commutation à semi-conducteur est activé et que le premier dispositif de commutation à semi-conducteur est désactivé, si une direction de courant du second enroulement est une première direction, le bloc-batterie est configuré pour être dans un état de décharge ; ou
lorsque le premier dispositif de commutation à semi-conducteur est activé et que le second dispositif de commutation à semi-conducteur est désactivé, si une direction de courant du premier enroulement est une seconde direction, le bloc-batterie est configuré pour être dans un état de charge, dans lequel la première direction est opposée à la seconde direction.

7. Circuit de commande de batterie, dans lequel le circuit de commande de batterie est conçu pour être appliqué à un bloc-batterie, qui comprend une première cellule électrochimique (B1) et une seconde cellule électrochimique (B2), dans lequel une électrode positive de la première cellule électrochimique est couplée à une électrode négative de la seconde cellule électrochimique ;
le circuit de commande de batterie comprend une première inductance (L2), un premier dispositif de commutation à semi-conducteur (S3) et un second dispositif de commutation à semi-conducteur (S4),
la première inductance comprend un premier enroulement et un second enroulement, et une première borne du premier enroulement et une première borne du second enroulement sont des bornes pointillées dans lequel la première inductance est agencée et configurée de sorte que des courants alternatifs sont fournis séparément à la première borne du premier enroulement et à la première borne du second enroulement pour générer des champs magnétiques de sorte que des directions de flux des champs magnétiques générés par les deux enroulements sont identiques ; la première borne du premier enroulement est agencée pour être couplée à une électrode positive de la seconde cellule électrochimique, une seconde borne du premier enroulement est couplée à une première borne du premier dispositif de commutation à semi-conducteur, et une deuxième borne du premier dispositif de commutation à semi-conducteur est agencée pour être couplée à une électrode négative de la première cellule électrochimique ; et
la seconde borne du second enroulement est agencée pour être couplée à l'électrode positive de la première cellule électrochimique, la première borne du second enroulement est couplée à une première borne du second dispositif de commutation à semi-conducteur, et une seconde borne du second dispositif de commutation à semi-conducteur est agencée pour être couplée à l'électrode négative de la première cellule électrochimique, dans lequel, le circuit de commande de batterie comporte un module de commande (1001), et le module de commande est couplé à une troisième borne du premier dispositif de commutation à semi-conducteur et à une troisième borne du second dispositif de commutation à semi-conducteur ;
dans lequel le module de commande est configuré pour activer alternativement le premier dispositif de commutation à semi-conducteur et le second dispositif de commutation à semi-conducteur ; et
le circuit de commande de batterie comporte en outre un module de détection de température (1002), dans lequel le module de détection de température est configuré pour : détecter des températures de la première cellule électrochimique et de la seconde cellule électrochimique, et envoyer les températures de la première cellule électrochimique et de la seconde cellule électrochimique au module de commande ; **caractérisé en ce que** le module de commande est configuré pour : lorsqu'une température d'au moins l'une parmi la première cellule électrochimique et la seconde cellule électrochimique est inférieure à une température prédéfinie, commander, à une fréquence préétablie, le premier dispositif de commutation à semi-conducteur et le second dispositif de commutation à semi-conducteur pour qu'ils soient activés alternativement.

8. Circuit de commande de batterie selon la revendication 7, dans lequel le module de commande est configuré de sorte que le premier dispositif de commutation à semi-conducteur est activé et le second dispositif de commutation à semi-conducteur est désactivé, lorsque la première cellule électrochimique et la seconde cellule électrochimique sont dans un état de décharge ;
ou
de sorte que le second dispositif de commutation à semi-conducteur est activé et le premier dispositif de commutation à semi-conducteur est désactivé, lorsque la première cellule électrochimique est dans un état de charge.

9. Circuit de commande de batterie selon la revendication 7, dans lequel lorsque le premier dispositif de commutation à semi-conducteur est activé et que le second dispositif de commutation à semi-conducteur est désactivé, si une direction de courant du premier enroulement est une première direction, la première cellule électrochimique et la seconde cellule électrochimique sont toutes deux configurées pour être dans un état de décharge ; lorsque le second dispositif de commutation à semi-conducteur est activé et que le premier dispositif de commutation à semi-conducteur est désactivé, si une direction de courant du second enroulement est une seconde direction, la première cellule électrochimique est configurée pour être dans un état de charge ;
lorsque le second dispositif de commutation à semi-conducteur est activé et que le premier dispositif de commutation à semi-conducteur est désactivé, si une direction de courant du second enroulement est une première direction, la première cellule électrochimique est configurée pour être dans un état de décharge ; ou
lorsque le premier dispositif de commutation à semi-conducteur est activé et que le second dispositif de commutation à semi-conducteur est désactivé, si une direction de courant du premier enroulement est une seconde direction, la première cellule électrochimique et la seconde cellule électrochimique sont dans un état de charge.

10. Batterie, dans laquelle la batterie comprend un bloc-batterie et le circuit de commande de batterie selon l'une quelconque des revendications 1 à 9.

11. Dispositif électronique, dans lequel le dispositif électronique comprend une charge et la batterie selon la revendication 10, et la batterie est configurée pour fournir de l'énergie à la charge.
